(19) Europäisches Patentamt
European Patent Office
Office européen des brevets

(11) EP 1 169 354 B1

(12) FASCICULE DE BREVET EUROPEEN

(45) Date de publication et mention de la délivrance du brevet: **20.07.2005 Bulletin 2005/29**

(21) Numéro de dépôt: **00912735.8**

(22) Date de dépôt: **24.03.2000**

(51) Int Cl.7: **C08F 2/06**, C08F 2/12

(86) Numéro de dépôt international: **PCT/FR2000/000739**

(87) Numéro de publication internationale: **WO 2000/059951 (12.10.2000 Gazette 2000/41)**

# (54) MICROPARTICULES RETICULEES, LEUR PROCEDE DE PREPARATION ET APPLICATIONS

VERNETZTE MIKROPARTIKEL, VERFAHREN ZU DEREN HERSTELLUNG UND DEREN VERWENDUNG

CROSS-LINKED MICROPARTICLES, METHOD FOR THE PRODUCTION AND USE THEREOF

(84) Etats contractants désignés:
**AT BE CH CY DE DK ES FI FR GB GR IE IT LI LU MC NL PT SE**

(30) Priorité: **31.03.1999 FR 9904041**

(43) Date de publication de la demande:
**09.01.2002 Bulletin 2002/02**

(73) Titulaire: **CRAY VALLEY SA
92400 Courbevoie (FR)**

(72) Inventeurs:
- **PASCAULT, Jean-Pierre
F-69900 Villeurbanne (FR)**
- **VALETTE, Ludovic
F-67500 Haguenau (FR)**
- **MAGNY, Benoît
F-60550 Verneuil en Halatte (FR)**

(74) Mandataire: **Killis, Andréas
Cray Valley
Patents Department
Centre De Recherche De L'Oise. BP 22
60550 Verneuil en Halatte (FR)**

(56) Documents cités:
**GB-A- 2 178 048**

- **CHEMICAL ABSTRACTS, vol. 105, no. 4, 28 juillet 1986 (1986-07-28) Columbus, Ohio, US; abstract no. 25184, "NONAQUEOUS RESIN DISPERSIONS" page 41; colonne 1; XP002123686 & JP 60 226513 A (RICOH CO. LTD.)**
- **CHEMICAL ABSTRACTS, vol. 95, no. 22, 30 novembre 1981 (1981-11-30) Columbus, Ohio, US; abstract no. 188086, "NONAQUEOUS EMULSIONS OF ACRYLIC POLYMERS" page 32; colonne 1; XP002123687 & JP 08 179111 A (RICOH CO. LTD.)**

EP 1 169 354 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

Cette invention concerne des microparticules réticulées définies par leur procédé d'obtention par polymérisation en dispersion en milieu non aqueux sans utilisation d'agent stabilisant polymère, le procédé associé et leurs applications dans des compositions de revêtements et de moulage, comme additifs réactifs ou non réactifs, régulateurs de la rhéologie et/ou de renforcement et/ou de flexibilisation de la matrice hôte.

Les microparticules réticulées, comme celles décrites dans la présente invention, sont aussi couramment désignées par le terme « microgels ». Ces microgels sont essentiellement caractérisés par une structure globulaire (quelques nm à quelques microns) d'un polymère de masse très élevée comportant des noeuds de réticulation intramoléculaires. Advances in Polymer Science (1998) vol 136, p. 139-234 présente une revue bibliographique générale sur les microgels, leurs méthodes de préparation et quelques applications.

Les méthodes les plus courantes dans la préparation de microparticules réticulées ou microgels sont d'une part la polymérisation en émulsion en milieu aqueux et d'autre part la polymérisation en dispersion en milieu non aqueux de compositions de composés polymérisables comportant entre autres un composé polymérisable ayant la fonction d'agent réticulant. Dans les deux cas, le milieu de polymérisation est non solvant du polymère formé qui précipite sous forme de particules de polymère. Le problème essentiel posé pour ces deux modes de préparation est la nécessité d'une stabilisation des particules formées au cours de la polymérisation pour les protéger des interactions interparticulaires fortes qui peuvent conduire, si elles ne sont pas maîtrisées, à une agglomération et une prise en masse des particules formées. Cette stabilisation est un paramètre clé indispensable dans le contrôle de la taille des microparticules et en particulier dans la plage en dessous du micron. L'essentiel de performances des microparticules est directement lié à leur structure spécifique et à leur taille.

Les stabilisants stériques couramment utilisés pour la préparation de microgels par émulsion ou par dispersion sont essentiellement de structure polymère, bien définie et adaptée à chaque cas, suivant le milieu de polymérisation et la structure de la particule à stabiliser. Macromolecules 1996, 29, 8650-55 décrit en particulier des microgels à base de polyesters insaturés de structure particulière auto-émulsifiable (particules autostabilisées). US 4206099 décrit des microparticules réticulées obtenues par polycondensation en milieu non aqueux en utilisant comme stabilisants stériques des copolymères greffés. US 4 605 720 décrit des microparticules acryliques réticulées obtenues par polymérisation radicalaire en dispersion en milieu non aqueux, en utilisant des stabilisants polymères.

Parmi les inconvénients essentiels des microparticules réticulées obtenues avec des stabilisants à structure polymère, on peut citer :

- la disponibilité limitée du stabilisant polymère adapté au cas par cas en fonction du milieu de polymérisation et de la structure de la particule à stabiliser, qui nécessite souvent la préparation spécifique préalable du polymère stabilisant dans une étape séparée supplémentaire compliquant ainsi la méthode d'accès aux microparticules visées.
- des concentrations relativement importantes de polymère stabilisant sont nécessaires pour obtenir des tailles de particules inférieures au micron, ce qui pose souvent des problèmes de solubilité du polymère et de viscosité de la solution correspondante avec une limitation du choix des couples polymère stabilisant / solvant du polymère stabilisant et des monomères, et non solvant du polymère des particules formées.
- bien que la concentration et la masse moléculaire élevée de polymère stabilisant soient favorables à la stabilisation stérique des particules formées lors de la polymérisation, cette présence de barrière stérique en couche externe peut poser des problèmes d'accessibilité de la structure protégée de la particule, créant ainsi suivant les cas une réduction de l'efficacité des fonctions réactives portées par la particule ou une incompatibilité vis à vis de la composition de revêtement ou de moulage d'accueil avec des répercussions négatives sur les performances finales du revêtement

ou du produit moulé.

- certaines structures spécifiques de microparticules sont difficiles sinon impossibles à obtenir compte tenu du fait que la présence indispensable du polymère stabilisant limite automatiquement les possibilités de structure de la particule (noyau / coquille /fonctionnalité effective) et les propriétés physicochimiques souhaitables de la microparticule par rapport au milieu et à l'application visée.

La présente invention propose de remédier de manière simple à ces inconvénients avec des microparticules réticulées de taille entre 10 et 300 nm, de préférence entre 10 et 200 nm et plus particulièrement de 20 à 100 nm, obtenues par polymérisation en dispersion en milieu non aqueux non solvant du polymère formé, d'une composition de composés polymérisables éthyléniquement insaturés, lesdites microparticules étant caractérisées en ce que ladite composition comprend :

- au moins un monomère A, comportant une seule insaturation éthylénique polymérisable par voie radicalaire, conférant aux microparticules formées dans ledit milieu non aqueux, une autostabilisation pendant et après polymérisation, sans aucune addition de polymère ayant une fonction d'agent stabilisant, ni avant ni pendant ni après polymérisation
- au moins un composé B comportant au moins deux insaturations éthyléniques polymérisables par voie radicalaire

et en option suivant les cas :

- au moins un composé C comportant une seule insaturation éthylénique polymérisable par voie radicalaire différent de A
  et/ou
- au moins un composé D différent de A, de B et de C et comportant au moins une insaturation éthylénique polymérisable par voie radicalaire et au moins une deuxième fonction réactive f1 différente d'une insaturation éthylénique.

Les microparticules réticulées de la présente invention sont obtenues par polymérisation radicalaire en dispersion en milieu non aqueux non solvant du polymère formé, d'une composition de composés polymérisables éthyléniquement insaturés comprenant les composés A, B, C, D, tels que définis précédemment, en absence de tout polymère additionné stabilisant des microparticules, formées au cours de la polymérisation, ni avant ni pendant ni après la polymérisation en dispersion.

Les composés A sont impérativement des monomères avec une seule insaturation éthylénique polymérisable par voie radicalaire, tandis que les composés B, C, et D peuvent être des monomères et/ou oligomères. Ces oligomères ont des masses moléculaires $\overline{Mn}$ inférieures à 2500 et de préférence inférieures à 1500.

Les monomères A conférant aux microparticules formées une autostabilisation telle que définie précédemment, peuvent être sélectionnés parmi les monomères n'ayant qu'une seule insaturation éthylénique polymérisable par voie radicalaire, de masse moléculaire $\overline{Mn}$ inférieure à 600 et de préférence inférieure à 400, ayant une seule insaturation éthylénique polymérisable sélectionnée parmi les (méth)acrylates, maléates, vinyles et portée par un groupement aliphatique linéaire ou ramifié ou un groupement alicyclique mono ou polycyclique substitué ou non substitué et pouvant éventuellement porter au moins une fonction f2 réactive différente de l'insaturation éthylénique polymérisable. D'une manière générale, la fonction de stabilisation du monomère A est liée à une adéquation du paramètre de solubilité de ce monomère par rapport à celui du milieu de polymérisation et celui du polymère formé. Le terme « (méth)acrylate » est à interpréter partout comme « acrylate et/ou méthacrylate ».

Les monomères A ont une structure chimique correspondant à la formule générale (I) suivante :

$$CH_2=CR_1\text{-}X\text{-}(R_2\text{-}Y)_k\text{-}R \qquad (I)$$

avec $R_1$ = H, $CH_3$
X = ester-(C=O)O-, amide-(C=O) N($R_3$)-
Y = ester-O(O=C)-, amide-($R_3$)N(C=O)-, uréthane-O(O=C)NH-
$R_2$ = radical alkylène en $C_2$-$C_6$, pouvant être substitué par des groupements fonctionnels tels que OH
$R_3$ = alkyl en $C_1$-$C_6$, H
k = 0 ou 1
R = radical alkyl, alkényle linéaires ou ramifiés en $C_8$-$C_{22}$ ou aralkyles substitués sur le cycle aromatique, en $C_8$-$C_{22}$ ou radical acyclique, mono ou polycyclique substitué ou non-substitué en $C_6$-$C_{22}$, pouvant comporter une fonction réactive f2 sélectionnée parmi : acide ou anhydride carboxylique, hydroxy, époxy, isocyanate, silane.

Les monomères A préférés de la formule (I) correspondent à R choisi parmi :

l'isobomyle, le lauryle, l'octadécyle, l'isodécyle, le tridécyle, le docosanyle, le dicyclopentadienyle, le cyclohexyle ou un groupement alkyle ou cycloaliphatique en $C_8$-$C_{22}$ portant une fonction réactive f2 acide ou anhydride carboxylique, hydroxy ou époxy, isocyanate, silane. Comme exemple de monomères A portant une fonction f2 acide carboxylique, nous pouvons citer les dérivés mono(méth)acrylés d'anhydride succinique substitué par un alkyl ou alkényl linéaire ou ramifié en $C_6$-$C_{22}$, de préférence en $C_6$-$C_{18}$, obtenus par réaction de l'anhydride alkyl- ou alkényl-substitué avec un hydroxyalkyl(méth)acrylate avec un groupement hydroxyalkyl en $C_2$-$C_6$ et de préférence en $C_2$ ou $C_3$. Comme exemple de monomère A portant une fonction f2 hydroxy, nous pouvons citer les dérivés mono (méth)acrylés d'acide hydroxystéarique, obtenus par réaction de l'acide hydroxystéarique avec le glycidyle méthacrylate ou (méth)acrylate de Cardura E10. Une fonction f2 époxy peut être introduite par exemple le (méth)acrylate de dicyclopentadiène époxydé, (méth)acrylate de vinyl norbornène époxydé ou (méth)acrylates comportant un époxy cycloaliphatique tel que décrit dans WO 98/28286, ou un (méth)acrylate d'acide gras insaturé époxydé. Une fonction f2 peut être introduite avec un mono(méth)acrylate dérivé de la réaction entre un diisocyanate cycloaliphatique ou aliphatique en $C_6$-$C_{12}$ avec un hydroxy alkyl (méth)acrylate avec un alkyl en $C_2$-$C_6$.

Le taux molaire des monomères A dans les microparticules finales obtenues peut varier de 5% à 99% suivant la nature du monomère A d'une part, et d'autre part, suivant le rôle rempli soit comme simple monomère de stabilisation d'une composition variable à base de composés B, C, D, soit comme à la fois monomère de stabilisation et composant de base prédominant des microparticules visées. Par conséquent, le pourcentage molaire ne sera limité que par les performances souhaitées des microparticules à obtenir. D'une manière générale, l'effet autostabilisant est suffisant dans une plage allant de 5% à 80% en moles et en fonction du monomère A choisi. Les monomères A ont par la définition de leur fonction, la spécificité de se fixer préférentiellement sur la couche extérieure des microparticules et plus spécifiquement à la surface de celles-ci. Ce point est important en particulier dans le cas où le monomère A porte une fonction réactive f2 telle que définie précédemment. En effet, dans ce cas, la spécificité du monomère A lui permet de fixer la fonction réactive f2 spécifiquement à la surface de la microparticule améliorant ainsi encore plus significativement son accessibilité et sa réactivité globale par rapport aux mêmes fonctions apportées par les composés D porteurs de fonctions f1, lesquelles fonctions f1 se trouvent réparties statistiquement dans tout le volume de la microparticule, avec une accessibilité moins facile des fonctions au coeur de la microparticule qu'en surface. Si plus d'un monomère A portant des fonctions f2 est utilisé, les fonctions f2 différentes ne doivent pas réagir entre elles ni avec les fonctions f1 des composés D, au cours de la polymérisation.

Les composés B comportent au moins deux insaturations éthyléniques et servent d'agent de réticulation des microparticules formées. B est un composant essentiel de la composition des composés polymérisables. Ce sont essentiellement des monomères et/ou oligomères éthyléniquement multifonctionnels avec une fonctionnalité en insaturations polymérisables par voie radicalaire d'au moins 2. Dans le cas des monomères, la fonctionnalité, telle que définie précédemment, peut varier de préférence de 2 à 6. Tels monomères sont choisis parmi les di(méth)acrylates d'éthylène glycol, de propylène glycol, de butane diol, de methyl-2 propane diol, de néopentyl glycol, d'hexane diol, de zinc et/ou de calcium ou les divinyl benzènes substitués ou non substitués, les tri(méth)acrylates de glycérol, de triméthylol propane et/ou des dérivés alkoxylés, les tri- ou tetra(méth)acrylates de pentaérythritol et les penta- ou hexa (méth)acrylates de dipentaérythritol. Les oligomères multifonctionnels ont une fonctionnalité allant de 2 à 50 et de préférence de 2 à 20 et une masse moléculaire $\overline{Mn}$ inférieure à 2500, de préférence inférieure à 1500. La fonctionnalité et $\overline{Mn}$ sont fixés en fonction de la densité de réticulation désirée. Plus $\overline{Mn}$ est faible et plus la fonctionnalité est élevée et plus la densité de réticulation des microparticules sera élevée. Tels oligomères sont choisis parmi les esters (méth) acryliques d'oligomères polyols par exemple à base de polyéthers, comportant des motifs éthers choisis parmi l'oxyéthylène et/ou oxypropylène et/ou oxytetraméthylène, ou à base de polyesters saturés, ou à base de polyuréthanes, les polyesters insaturés, ou les oligomères acryliques (méth)acrylés qui peuvent être obtenus par exemple soit par (méth)acrylation de copolymères (méth)acryliques à base de méthacrylate de glycidyle par l'acide (méth)acrylique soit par (méth)acrylation de copolymères (méth)acryliques à base d'acide (méth)acrylique par le méthacrylate de glycidyle.

Le taux molaire du composé B peut varier de 0,02% à 30% et de préférence entre 0,5% à 15%. La limitation de ce taux est importante car au-delà d'un taux limite la probabilité de pontage chimique entre microparticules devient importante, avec comme conséquence un risque important de déstabilisation, agglomération et sédimentation des microparticules.

Les composés C sont des monomères différents des monomères A tels que définis précédemment et/ou des oligomères, comportant une seule insaturation éthylénique polymérisable par voie radicalaire, et sont des composants d'ajustement de la composition de base en fonction des propriétés visées des microparticules qui peuvent varier et s'adapter suivant chaque application particulière. Ils sont sélectionnés de préférence parmi les monomères (méth) acryliques tels que les (méth)acrylates de méthyle, d'éthyle, de propyle, de butyle ou de tertiobutyle ou de éthyl-2 héxyle, ou les monomères vinyl aromatiques tels que le styrène ou les vinyl toluènes ou les esters vinyliques tel que l'acétate de vinyle ou les oligomères (méth)acrylés de $\overline{Mn}$ inférieure à 2500 et plus particulièrement inférieure à 1500 tels que les (méth)acrylates d'oligomères alcools monofonctionnels. Les (méth)acrylates d'oligomères préférés sont les (méth)acrylates de monoalcools polyalkoxylés, comportant des unités alkoxy choisies parmi l'oxyéthylène et/ou l'oxypropylène et/ou l'oxytetraméthylène, ou les (méth)acrylates dérivés de monoalcools à base de polycaprolactone, ou de polyesters ou de polyuréthanes. La présence de ces composés est optionnelle en fonction de la structure et des performances recherchées des microparticules à obtenir. Ce type de monomères ou oligomères peut ajuster les performances mécaniques des microparticules en termes de dureté ou de flexibilité du coeur de la particule en fonction des températures Tg correspondantes à la transition vitreuse. Par exemple, l'association des structures à Tg élevée, telles que le méthacrylate de méthyle et/ou le styrène, avec des structures à faible Tg, tel que l'acrylate de butyle permet d'obtenir, en fonction des proportions ajustées, des microparticules à caractère prédominant allant du plus dur au plus mou. Ce type de structure est particulièrement intéressant dans le renforcement d'une matrice molle ou de la

flexibilisation d'une matrice dure ou dans la recherche d'un compromis dureté/flexibilité pour des applications dans les revêtements ou les compositions de moulage, en particulier thermodurcissables. Leur taux molaire peut varier de 0 à 80% en fonction de la structure souhaitée de la microparticule finale.

Les composés D sont des monomères, différents de A ou B ou C, et/ou oligomères, différents de B ou C, portant au moins une insaturation éthylénique, polymérisable par voie radicalaire et au moins une deuxième fonction réactive f1 différente de l'insaturation éthylénique. Ces monomères ou oligomères fonctionnalisés portent des fonctions réactives f1 sélectionnées parmi : acide ou anhydride carboxylique, hydroxy, époxy, isocyanate, silane, amine ou oxazoline. Les exemples suivants de composés D possibles peuvent être cités :

- dans le cas où la fonction f1 est un acide carboxylique : les acides (méth)acrylique, maléique, fumarique ou itaconique
- dans le cas où f1 est une fonction anhydride : les anhydrides maléique ou itaconique
- dans le cas où f1 est un hydroxy : les hydroxyalkyl (méth)acrylates avec un hydroxyalkyl en $C_2$-$C_4$ tels que l'hydroxy éthyl, l'hydroxypropyl, l'hydroxybutyle, ou les mono(méth)acrylates de polycaprolactone ou de diols tels que : polyéthers diols comportant des unités éthers choisies parmi l'oxyethylène et/ou oxypropylène et/ou oxytetraméthylène, polyesters diols ou polyuréthanes diols, de $\overline{Mn}$ inférieure à 2500 et de préférence inférieure à 1500
- dans le cas où f1 est une fonction époxy : le glycidyle méthacrylate, ou un (méth)acrylate de glycidyle alkoxylé tel que décrit dans WO 98/28287
- dans le cas où la fonction f1 est un isocyanate : l'isocyanatoéthyl (méth)acrylate ou le mono(méth)acrylate d'un uréthane isocyanate dérivé de la condensation d'un hydroxyalkyl (méth)acrylate en $C_2$-$C_6$ avec un diisocyanate aromatique tel que le Diisocyanato-Toluene (TDI).
- dans le cas où f1 est une fonction silane celle-ci peut être utilisée sous forme de trialkyl- ou trialkoxy- silane portée par un dérivé monomère ou oligomère (méth)acrylique.
- dans le cas où f1 est une fonction amine : le tertio butyl amino éthylméthacrylate ou le diméthyl amino éthyl méthacrylate
- dans le cas où f1 est une fonction oxazoline : (méth)acrylates d'oxazoline et plus particulièrement le 2-(5-méthacryloyl-pentyl)-1,3 oxazoline

D'une manière générale les fonctions f1 portées par au moins un composé D peuvent être différentes mais elles ne doivent pas réagir entre elles ou avec d'éventuelles fonctions f2 portées par des monomères A, au cours de la polymérisation.

Le choix du composé D et de sa fonction réactive et du taux molaire dépendra essentiellement du système réactif d'application et de la composition et fonctionnalité de ce dernier. Le taux molaire peut ainsi varier de 0 pour des systèmes non réactifs, à 80% pour des systèmes fortement réactifs.

Il est évident pour l'homme du métier que ces fonctions ne doivent pas interagir avec le milieu de polymérisation afin que ces fonctions réactives soient préservées. Un moyen de préserver les fonctions f1 susceptibles d'interagir avec le milieu de polymérisation est le blocage de la fonction f1 par un agent bloquant avec déblocage possible de f1 après polymérisation dans le même contexte qu'une modification chimique des fonctions f1 après l'étape de polymérisation. Un tel blocage préventif et déblocage postérieur est bien connu par l'homme du métier.

Les fonctions f1 portées initialement par le composé D et/ou les fonctions f2 éventuellement portées par le monomère A peuvent être modifiées après polymérisation en fonctions respectives f3 et f4 par réaction chimique en une ou plusieurs étapes avec les réactifs appropriés. Par exemple, l'introduction d'une fonction finale f4 (méth)acrylate pourra se faire soit à partir d'une fonction f1 époxy par réaction avec l'acide (méth)acrylique, soit à partir de f1 acide carboxylique par réaction avec le (méth)acrylate de glycidyle ou l'hydroxy éthyl (méth)acrylate. Ces dernières réactions peuvent aussi être utilisées pour introduire des fonctions f3 acryliques spécifiquement à la surface de la microparticule à partir de possibles fonctions initiales f2 d'acide carboxy. Ces modifications chimiques peuvent être partielles ou totales et adaptées aux compositions d'application et le mécanisme utilisé de réticulation éventuelle. Une double fonctionnalité peut être recherchée dans un système dual de réticulation faisant intervenir deux mécanismes de réticulation comme par exemple acrylate et époxy pour des mécanismes de réticulation par voie radicalaire et cationique ou par voie radicalaire et de condensation.

Ainsi les microparticules initialement fonctionnalisées f1 et/ou f2, après une modification chimique adaptée des fonctions f1 et/ou f2, peuvent porter au moins partiellement des fonctions f3 et/ou f4 sélectionnées parmi les (méth) acrylates, les vinyles, les esters ou les amides à chaîne grasse insaturée en $C_{12}$-$C_{22}$, les maléates et/ou maléimides, esters dérivés d'alcools allyliques ou insaturations cycloaliphatiques à base de dicyclopentadiène ou de cycle tetrahydrophtalique, ou des sels d'acide carboxylique par neutralisation au moins partielle d'un acide carboxylique.

La composition molaire et la fonctionnalité des microgels peuvent être ajustées en fonction de l'application souhaitée. En fonction de la nature et des proportions des composés polymérisables A, B, C, D, les microparticules obtenues de taille allant de 10 à 300 nm peuvent être, après récupération, à l'état de liquide, de cire ou de poudre

solide avec des températures de transition vitreuse et/ou de fusion variables et ajustables en fonction des besoins de l'application souhaitée.

De préférence, la composition des composés polymérisables éthyléniquement insaturés comprend :

- 5-99% en moles d'au moins un monomère A comportant une seule insaturation éthylénique polymérisable par voie radicalaire, tel que défini précédemment
- 0,02-30 % et plus particulièrement de 0,5 à 15% en moles d'au moins un composé B comportant au moins deux insaturations éthyléniques polymérisables

et en option suivant les cas :

- 0-80% en moles d'au moins un composé C différent de A comportant une seule insaturation polymérisable
- 0-80 % en moles d'au moins un composé D différent de A, B, C comportant au moins une insaturation éthylénique polymérisable et au moins une deuxième fonction f1 réactive différente de l'insaturation éthylénique,

avec les % molaires de A et B et éventuellement de C et/ou D choisis dans les limites définies, de telle manière que leur somme soit égale à 100% par rapport à la composition des tous les composés polymérisables présents.

Plus particulièrement, dans le cas de microparticules avec une fonction initiale f1 époxy modifiable chimiquement, après polymérisation, en fonction f3 d'insaturation éthylénique, la composition des composés polymérisables peut comprendre :

- 0-30% en moles d'octadécyl (méth)acrylate et/ou 5-80% en moles d'isobornyl (méth)acrylate comme monomère A
- 0.02-30 % en moles de di(méth)acrylate d'héxane diol en tant que composé B
- 0-50% en moles de styrène et/ou de (méth)acrylate de méthyle et/ou de butyle ou de tertiobutyle, comme composé C
- 0-50 % en moles de (méth)acrylate de glycidyle comme composé D,

avec les % molaires de A, B, C, D sélectionnés de telle manière que leur somme soit égale à 100% de la composition des composés polymérisables et avec les fonctions réactives glycidyle pouvant être modifiées au moins partiellement par réaction avec un acide ou anhydride éthyléniquement insaturé. Comme exemple de tels acides éthyléniquement insaturés, nous pouvons citer les acides (méth)acryliques et l'acide ou anhydride maléique, l'anhydride itaconique ou l'acide fumarique.

Une structure particulière de microparticules peut être obtenue si la polymérisation est réalisée en plusieurs étapes successives par addition continue ou discontinue, c'est à dire en une seule fois, de la composition de chaque étape qui peut être identique ou différente. La composition de chaque étape comporte donc des composés A, B et éventuellement C et/ou D avec les mêmes fonctions essentielles respectives de stabilisation, de réticulation, d'ajustement de composition et de fonctionnalisation, que lorsque la polymérisation est réalisée en une seule étape. Les structures des microparticules ainsi obtenues peuvent être, en fonction de la composition de chaque étape, de type multicouche avec un coeur de microparticule de composition différente de celle de la couche extérieure.

Un deuxième objet de la présente invention est un procédé de préparation de microparticules réticulées de taille entre 10 et 300 nm comprenant une étape de polymérisation en dispersion, en milieu non aqueux non solvant du polymère à former, d'une composition de composés polymérisables éthyléniquement insaturés caractérisé en ce que l'étape de polymérisation est réalisée sur une composition comprenant :

- au moins un monomère A, comportant une seule insaturation éthylénique polymérisable par voie radicalaire et conférant aux microparticules formées dans ledit milieu non aqueux une autostabilisation pendant et après la polymérisation, sans aucune addition de polymère ayant une fonction d'agent stabilisant, ni avant ni pendant ni après la polymérisation en dispersion, avec ledit monomère A se trouvant préférentiellement fixé à la couche extérieure et plus préférentiellement à la surface des microparticules ainsi obtenues
- au moins un composé B, comportant au moins deux insaturations éthyléniques polymérisables

et en option et suivant les cas :

- au moins un composé C, comportant une seule insaturation éthylénique polymérisable, différent de A et/ou
- au moins un composé D différent de A, B, C, comportant au moins une insaturation éthylénique polymérisable et au moins une deuxième fonction f1 réactive différente de l'insaturation éthylénique.

Le composé A utilisé pour ce procédé est défini par la formule générale (I) suivante :

$$CH_2=CR_1-X-(R_2-Y)_k-R \qquad (I)$$

avec $R_1$ = H, $CH_3$
X = ester-(C=O)O-, amide-(C=O) N($R_3$)-
Y = ester-O(O=C)-, amide-($R_3$)N(C=O)-, uréthane-O(O=C)NH-
$R_2$ = radical alkylène en $C_2$-$C_6$, pouvant être substitué par des groupements fonctionnels tels que OH
$R_3$ = alkyle en $C_1$-$C_6$, H
k = 0 ou 1
R = radical alkyle, alkényle linéaires ou ramifiés en $C_8$-$C_{22}$ ou aralkyles substitués sur le cycle aromatique, en $C_8$-$C_{22}$, ou radical acyclique, mono ou polycyclique substitué ou non-substitué en $C_6$-$C_{22}$, pouvant comporter une fonction réactive f2 sélectionnée parmi : acide ou anhydride carboxylique, hydroxy, époxy, isocyanate, silane.

Les monomères A préférés de la formule (I) correspondent à R choisi parmi : l'isobornyle, le norbornyle, le lauryle, le tridécyle, l'isodécyle, l'octadécyle, le docosanyle, le dicyclopéntadienyle, le cyclohexyle, ou un groupement alkyle ou alkényl linéaires ou ramifiés ou aralkyl substitué ou cycloaliphatique en $C_8$-$C_{22}$ portant une fonction réactive f2 acide ou anhydride carboxylique, hydroxy, époxy et/ou isocyanate. Comme exemple de monomères A portant une fonction f2 acide carboxylique, nous pouvons citer les dérivés mono(méth)acrylés d'anhydride succinique substitué par un alkyle ou alkényle linéaire ou ramifié en $C_6$-$C_{22}$, de préférence en $C_6$-$C_{18}$, obtenus par réaction de l'anhydride alkyl- ou alkényl- substitué avec un hydroxyalkyl(méth)acrylate avec un groupement hydroxyalkyl en $C_2$-$C_6$ et de préférence en $C_2$ ou $C_3$. Comme exemple de monomère A portant une fonction f2 hydroxy, nous pouvons citer les dérivés mono(méth)acrylés d'acide hydroxystéarique, obtenus par réaction de l'acide hydroxystéarique avec le glycidyle méthacrylate ou le (méth)acrylate de Cardura E10. Une fonction f2 époxy peut être introduite par exemple avec le (méth) acrylate de dicyclopentadiène époxydé, (méth)acrylate de vinyl norbornène époxydé, ou un (méth)acrylate d'acide gras insaturé époxydé. Une fonction f2 peut être introduite avec un mono(méth)acrylate dérivé de la réaction entre un diisocyanate cycloahphatique ou aliphatique en $C_6$-$C_{12}$ avec un hydroxy alkyl (méth)acrylate avec un alkyl en $C_2$-$C_6$. En aucun cas ce procédé ne nécessite l'addition d'un polymère stabilisant pour stabiliser les microparticules en dispersion, ni avant ni pendant ni après la polymérisation. D'une manière générale, l'effet autostabilisant est suffisant dans une plage allant de 5% à 80 % en moles en fonction du monomère A choisi. Bien entendu dans le cas où le monomère A est seul en présence du composé B, dans ce cas ce taux molaire peut aller jusqu'à 99% en moles.

Les composés B, C, D de ce procédé qui peuvent être des monomères et/ou oligomères sont ceux déjà spécifiés pour les microparticules obtenues. Dans le cas où au moins un monomère A porte au moins une fonction f2 et au moins un composé D porte au moins une fonction f1, le choix de A et D se fait de telle sorte qu'il n'y ait pas de réaction entre ces fonctions pendant la polymérisation.

Le solvant utilisé pour ce procédé est un solvant organique ou un mélange de solvants organiques sélectionnés parmi les alcanes en $C_6$-$C_{10}$ tels que les hexanes, heptanes et plus particulièrement le n-heptane, cyclohexane, octanes, nonanes et/ou les alcanols en $C_3$-$C_5$ tels que l'isopropanol, butanol, pentanol. Les mélanges de solvants apolaires tels que l'heptane avec des solvants polaires tel que l'isopropanol sont préférés pour ajuster le pouvoir solvatant du milieu par rapport aux composés polymérisables d'une part, et d'autre part, le pouvoir non-solvatant du milieu qui devient un milieu de précipitation par rapport au polymère formé. D'autre part, ce milieu solvant doit être chimiquement inerte vis à vis des fonctions réactives f1 ou f2 ou autres fonctions présentes. Le rapport pondéral entre alcane en $C_6$-$C_{10}$ et alcanol en $C_3$-$C_5$ peut varier de 0/100 à 75/25 et plus particulièrement de 25/75 à 50/50. Ceci reste en particulier préféré dans le cas où ce mélange est à base de n-heptane ou de cyclohexane d'une part, et d'isopropanol ou de butanol d'autre part.

Le rapport pondéral entre la somme des composés A, B, C, D, d'une part et le solvant ou mélange de solvants d'autre part, peut varier de 10/90 à 50/50 et de préférence de 15/85 à 30/70. Ce rapport est un des paramètres du procédé permettant de régler la taille des microparticules. Plus la dilution augmente plus la taille des microparticules a tendance à diminuer.

La polymérisation en dispersion des composés éthyléniquement insaturés est réalisée par voie radicalaire par l'addition d'un amorceur radicalaire couramment utilisé pour ce type de polymérisation, adapté au milieu. La température de polymérisation est adaptée à la température de décomposition de l'amorceur radicalaire choisi et à la température d'ébullition du milieu solvant utilisé et pourra varier en général en fonction de l'amorceur et du milieu solvant utilisés de 20°C à 150°C. Comme exemple d'amorceur nous pouvons citer : les dérivés azo tels que l'azobisisobutyronitrile (AIBN) et dérivés, les peroxydes et hydroperoxydes ou tout autre système d'amorçage soluble dans le milieu de polymérisation et connus par l'homme du métier. Plus particulièrement, ces amorceurs peuvent être fonctionnalisés avec une fonction réactive f5 telle que hydroxy ou carboxy, comme par exemple des dérivés azo hydroxylés ou carboxylés. Dans ce cas les microparticules obtenues seront au moins partiellement fonctionnalisées par les fonctions f5. D'autre part, d'autres amorceurs radicalaires peuvent être utilisés permettant une polymérisation radicalaire

dite « contrôlée » ou « vivante » tels que décrits dans Comprehensive Polymer Science, Vol 3, p. 141-146, Pergamon, London, 1989. De même des agents de transfert de chaîne tels que des mercaptans peuvent être associés à l'amorceur pour mieux contrôler les masses moléculaires. La durée de polymérisation dépendra de la nature et du taux d'amorceur et de la température de polymérisation. Le taux d'amorceur usuel peut varier de 0,05 à 5% en poids par rapport à la somme des composés polymérisables A, B, C, D.

Selon un premier mode de réalisation de ce procédé en batch, la totalité des composés polymérisables A, B, C, D sont additionnés sous agitation dès le départ dans le réacteur contenant la totalité du solvant et maintenu à la température de polymérisation. Les monomères peuvent aussi être additionnés sous forme de solution dans une partie du solvant de polymérisation. L'amorçage de la polymérisation se fait sous forte agitation par addition progressive de l'amorceur radicalaire choisi soluble dans le milieu de polymérisation. Après la fin de l'addition de l'amorceur, la polymérisation se poursuit pendant une durée qui peut varier de 1 h à 8 h suivant la température, la nature et le taux de l'amorceur, la nature et la concentration globale en composés polymérisables. Les microparticules formées autostabilisées dans le milieu de polymérisation peuvent être récupérées soit par étapes successives de précipitation, par addition d'un non solvant tel qu'un alcool en proportion allant de 2/1 à 5/1 en poids par rapport à la dispersion, et ensuite de filtration et de séchage, soit par une étape unique d'évaporation du milieu solvant de dispersion, de préférence sous pression réduite de 10 à 30 mbars.

La taille finale des microparticules obtenues varie de 10 à 300 nm et de préférence entre 10 et 200 nm et plus particulièrement de 20 à 100 nm en fonction de la dilution des composés polymérisables et de la nature et du rapport molaire du monomère A choisi. Pour diminuer la taille des microparticules, on peut augmenter le taux de monomère A et/ou augmenter la masse molaire du monomère A à structure chimique de formule analogue et/ou augmenter le taux de dilution des composés polymérisables et/ou augmenter le pouvoir précipitant du milieu de polymérisation en ajustant la nature et/ou la composition du milieu solvant de polymérisation. L'avantage essentiel de ce procédé et de ses différents modes de réalisation est sa simplicité et sa flexibilité dans la préparation d'une variété importante de structures de microparticules, en faisant simplement varier la nature et les proportions des composés A, B, C, D.

Selon un deuxième mode de réalisation de ce procédé, celui-ci comprend une ou plusieurs étapes successives de polymérisation continues et/ou discontinues caractérisées respectivement par une addition de composés polymérisables respectivement en continu ou en une seule fois par étape concernée. Dans le cas où le procédé comporte plus d'une étape de polymérisation discontinue et/ou continue, la composition des polymérisables peut être identique ou différente d'une étape à l'autre. Ainsi, il est possible de réaliser des structures de microparticules très particulières de type multicouches en fonction de la composition des polymérisables de chaque étape et l'ordre chronologique de chaque étape continue ou discontinue.

Un mode de réalisation en continu de ce procédé est particulièrement préféré dans le cas où la composition des polymérisables comporte au moins un des composés A, B, C, D ayant une réactivité significativement différente de la réactivité moyenne des polymérisables. Ceci est particulièrement préféré dans le cas où le monomère A a une réactivité significativement différente de la réactivité moyenne des autres polymérisables. Cette réactivité peut être caractérisée par la vitesse de consommation des insaturations polymérisables de ces composés. Ceci est, par exemple, le cas si le monomère A est un méthacrylate et les autres composés polymérisables, des acrylates. Un procédé discontinu peut aussi être envisagé dans le cas où le monomère A a une réactivité significativement différente de la réactivité moyenne des polymérisables si le choix d'au moins un deuxième monomère A est bien adapté de manière à ce que les réactivités de ces deux monomères encadrent la réactivité moyenne des autres polymérisables.

Dans le cas où la composition des polymérisables comporte au moins un monomère A portant une fonction f2 et/ou au moins un monomère D portant une fonction f1, le procédé tel que décrit précédemment peut comprendre après l'étape de polymérisation une étape supplémentaire de modification chimique de la fonction f2 et/ou de la fonction f1. Cette étape de modification chimique peut avoir lieu, suivant les cas, soit avant la récupération des microparticules par évaporation du solvant de polymérisation, soit après récupération de ces microparticules, auquel cas la modification chimique peut avoir lieu, suivant le cas, soit en masse si la viscosité le permet à la température de la modification, soit en solution dans un solvant différent de celui de la polymérisation si celui-ci ne convient pas, en ce qui concerne la température ou l'inertie chimique. Comme exemple préféré de modification chimique, nous pouvons citer l'acrylation de fonctions réactives telles que : époxy et hydroxy par l'acide acrylique et méthacrylique ou l'anhydride ou acide maléique ou itaconique, ou acide ou anhydride carboxylique par le méthacrylate de glycidyle ou l'hydroxyéthyl-méthacrylate ou hydroxyéthyl-acrylate ou le (méth)acrylate d'oxazoline. Par exemple, l'acrylation peut avoir lieu en solution contenant environ 30 - 60% de microparticules dispersées, en présence de catalyseurs d'estérification tels que le Cr (III) diisopropyl salicylate, l'éthyl hexanoate de Cr (III), le bromure d'éthyle- triphényl-phosphonium, les amines tertiaires. Dans le cas où la fonction modifiée est une fonction vinyle, des fonctions OH sont modifiées par une vinyl azlactone tel que la 2-vinyl-4,4 diméthylazlactone ou un vinyl isocyanate tel que m-isopropényl, diméthyl, benzyl isocyanate.

Une variante de ce procédé peut comprendre avant l'étape de polymérisation, une étape de dispersion dans le milieu non aqueux de microparticules organiques ou minérales insolubles dans ce milieu, suivie d'une étape de

polymérisation telle que décrite précédemment. Dans ce cas, les microparticules organiques ou minérales en dispersion ont des tailles adaptées à celle des microparticules finales à obtenir. Les microparticules prédispersées peuvent être choisies parmi les pigments organiques ou minéraux ou charges ou additifs organiques ou minéraux ou des microparticules comme déjà décrites préalablement préparées insolubles dans le milieu de dispersion. Cette variante de procédé permet un enrobage ou une encapsulation au moins partielle mais simple et pratique des microparticules prédispersées dans le but, par exemple, d'améliorer leur dispersibilité dans d'autres milieux de dispersion (aqueux ou organiques) ou d'améliorer leur compatibilité dans des matrices d'accueil pour des compositions de revêtements, de moulage ou de composites.

Un troisième objet de l'invention concerne l'utilisation des microparticules telles que définies précédemment dans des compositions de revêtement ou de moulage en tant que composants réactifs uniques ou prédominants ou en tant qu'additifs réactifs ou non réactifs. Dans le cas où les microparticules constituent un système réactif unique ou prédominant dans la composition, le taux des microparticules réactives entre elles constituant le système peut aller jusqu'à 100%. Dans le cas où les microparticules sont utilisées en tant qu'additifs réactifs ou non réactifs, le taux préféré de microparticules peut varier de 0,5 à 50% et plus particulièrement de 1 à 30% en poids par rapport à la composition organique du revêtement ou du moulage.

Parmi les avantages particuliers de ces microparticules, rappelons une compatibilité et, suivant le cas, une réactivité nettement améliorée, sans aucune limitation forcée par un polymère stabilisant imposé par le fait de sa disponibilité.

D'autre part, leur structure particulière obtenue à travers le procédé spécifique utilisé leur confère un caractère d'autodispersibilité et d'autostabilisation dans un milieu solvant comparable à celui de la polymérisation. De même, ce procédé permet l'obtention de microparticules réticulées très monodispersées en taille, ce qui est important pour obtenir des performances rhéologiques et viscoélastiques spécifiques pour certaines applications dans le domaine des compositions de revêtements, des compositions de moulage ou des composites.

D'une manière générale, ces microparticules peuvent être utilisées dans des compositions de revêtements ou de moulage réticulables ou non réticulables pour :

- réduire la viscosité de ces compositions en permettant un meilleur mouillage et une meilleure application sur les substrats à revêtir et, d'autre part, des compositions à plus haut extrait sec et par conséquent à plus faible taux de composés organiques volatiles
- mieux contrôler, par application spécifique, la rhéologie de ces compositions par ajustement de la structure des microparticules
- renforcer ou plastifier la matrice en fonction de la compatibilité et de la Tg de la microparticule par rapport à la matrice hôte

Les microparticules en tant qu'additifs non réactifs peuvent avoir des fonctions sélectionnées parmi f1, f2, f3, f4 telles que définies précédemment qui tout en étant chimiquement inertes, vis à vis de la composition hôte, peuvent améliorer sensiblement la compatibilité de la microparticule vis à vis de la matrice hôte par interactions physicochimiques favorables.

Dans le cas de microparticules utilisées comme additifs réactifs, leurs fonctions réactives sont sélectionnées et adaptées ou modifiées pour réagir avec les fonctions réactives de la composition réticulable hôte ou entre elles. Par exemple, dans le cas d'une composition réticulable par voie radicalaire thermique ou photochimique contenant des monomères et/ou oligomères mono- ou multi-fonctionnels éthyléniquement insaturés, les microparticules, après modification chimique suivant l'étape de polymérisation, seront de préférence polyinsaturées. Des microparticules réactives multiépoxydées ou multihydroxylées seront adaptées pour des compositions de revêtements d'époxydes photoréticulables par voie cationique en présence de photoamorceurs cationiques tels que les sels de triaryl sulfonium ou de diaryl iodonium. Des microparticules réactives multiépoxydées ou multicarboxylées seront adaptées pour la réticulation de compositions de revêtement ou de moulage à base d'époxydes et de polyamines ou de copolymères acryliques carboxylés ou d'anhydride de diacide carboxylique. De même, des microparticules multicarboxylées partiellement neutralisées peuvent servir de microparticules hydrodispersables ou hydrosolubles suivant le degré de neutralisation et peuvent être utilisées dans des compositions de revêtements à base de dispersions aqueuses de polymères réactives ou non réactives. Ce caractère d'hydrodispersibilité ou d'hydrosolubilité peut aussi être conféré par un composé C et/ou B sélectionnés parmi respectivement les mono- et di- acrylates ou méthacrylates de polyéthers diols tels que le polyéthylène glycol de $\overline{Mn}$ inférieure à 1500. En particulier des microparticules ainsi hydrodispersibles ou hydrosolubles portant des fonctions acrylates ou méthacrylates après modification partielle de leurs fonctions initiales f1 ou f2 peuvent être utilisées dans des revêtements photoréticulables à base de dispersions aqueuses de polymères, de préférence acryliques. Dans le cas où des microparticules sont utilisées comme additifs réactifs du fait de leur fonctionnalité élevée, elles ont une fonction de véritable agent réticulant et d'activateur de réactivité du système concerné. L'effet sur les performances mécaniques du revêtement ou du produit moulé se traduit, soit par un renforcement accru de la matrice, soit par un effet combiné de renforcement et de flexibilité accrus, en fonction de la fonctionnalité, compatibilité et Tg de la microparticule greffée chimiquement à la matrice hôte, la microparticule se comportant comme une microcharge greffée ou non et dure ou flexible.

D'autre part, suivant la nature des fonctions réactives, en particulier dans le cas d'insaturations réticulables par voie radicalaire, ces microparticules peuvent être utilisées seules ou en tant que composant prédominant d'une matrice réticulable. Ceci reste aussi valable pour des microparticules différentes portant des fonctions f1 et/ou f2 et/ou f3 et/ou f4 distinctes mais réactives entre elles pouvant ainsi réaliser un système réactif bicomposant, ce système n'étant que le composant unique ou prédominant de la composition. Ceci est en particulier intéressant dans le cas des microparticules utilisables comme poudres réticulables pour des systèmes de revêtement ou de moulage.

Les compositions de revêtement ou de moulage concernées peuvent trouver des applications dans des domaines très variés tels que les vernis de protection, les peintures, adhésifs, encres; composites et matrices pour composites, poudres à mouler ou pour revêtements, ou les produits moulés. A ce titre, des additifs et/ou charges usuelles peuvent être présentes en fonction de l'application visée.

Les exemples suivants peuvent illustrer la présente invention

EXEMPLE 1

Synthèse de microparticules réticulées (MPR)

94 g de n-heptane et 93.5 g de propanol-2 sont introduits dans un - réacteur de 500 ml équipé d'un réfrigérant et d'une agitation mécanique et sous un léger flux d'azote. La température est portée à 70°C. Un mélange de monomères (méth)acryliques de composition donnée ci-dessous a ensuite été chargée dans le réacteur :

| | | |
|---|---|---|
| acrylate d'octadécyle (ODA) | 31.0 g | soit 30% molaire (par rapport aux monomères) |
| acrylate de butyle (BA) | 20.2 g | soit 48% molaire |
| méthacrylate de méthyle (MMA) | 3.3 g | soit 10% molaire |
| méthacrylate de glycidyle (GMA) | 3.0 g | soit 6% molaire |
| diacrylate d'hexane diol (HDDA) | 4.8 g | soit 6% molaire |

La composition par composé A, B, C, D est la suivante :

Monomère A = 30% en mole de ODA
Monomère B = 6% en mole de HDDA
Monomère C = 48% en BA et 10% en mole de MMA
Monomère D = 6% en mole de GMA

La température est stabilisée à 70°C et 0.52 g d'azobisisobutyronitrile (AIBN) est introduit dans le réacteur, soit 10 mmol/1. La réaction se déroule à température isotherme (70°C) pendant 5 h, sans noter d'exothermie significative. La dispersion reste transparente et homogène, de faible viscosité durant toute la durée de la synthèse. A la fin des 5 h de réaction, la conversion des monomères est supérieure à 95% d'après le suivi des monomères par chromatographie à exclusion stérique (SEC) et par la mesure du taux de solides dans la solution. Les MPR formées sont isolées par distillation des solvants de synthèse. Le réfrigérant est remplacé par une colonne à distiller et la température de la dispersion est progressivement augmentée jusqu'à 105°C. Les MPR sont ensuite séchées sous vide (20 mbars) pour retirer toute trace de solvant résiduel. Les MPR, une fois séchées, ont l'aspect d'une cire, collante à température ambiante. La taille et la masse molaire des MPR sont déterminées par une technique de diffusion de lumière LASER (réf. DAWN WYATT Technology à $\lambda$ = 632 nm) à angles multiples en sortie des colonnes de chromatographie par exclusion stérique (SEC-MALLS). Cette technique permet l'accès à la masse molaire moyenne en masse vraie, $\overline{Mw}$, ainsi qu'au rayon de giration moyen $R_z$ des particules gonflées par la phase mobile (solvant = tetrahydrofurane). Les valeurs ainsi déterminées sont $\overline{Mw} = 3.10^6$ g/mol et $\overline{Rz}$ = 54 nm.

Les MPR synthétisées portent des fonctions époxy à un taux mesuré de 3,5 $10^{-4}$ mol/g.

EXEMPLE 2

Les MPR synthétisées dans l'Exemple 1 sont modifiées par acrylation. Les groupes époxydes des MPR sont modifiés chimiquement par réaction avec l'acide acrylique (AA) à 100°C en présence d'un catalyseur de réaction, 0,8% en poids de diisopropyle salicylate de chrome III (CrDIPS) et de 0,3% en poids d'hydroquinone pour éviter toute polymérisation radicalaire des fonctions acryliques. Grâce à la faible viscosité des MPR en masse à 100%, la modification

chimique se déroule sans solvant, dans un réacteur agité de 250 ml équipé d'un réfrigérant et sous un léger flux d'azote. L'acide acrylique est introduit en léger excès tel que [acide] / [époxy] = 1.05. En fin de modification chimique, les MPR obtenues ont une concentration en double liaisons acryliques réactives [C=C] = 3.2 $10^{-4}$ mol/g. Ceci correspond à un taux d'acrylation de 90% mesuré par dosage chimique standard des fonctions époxy résiduelles. L'aspect à température ambiante est identique à l'Exemple 1.

EXEMPLE 3

Comparatif

L'invention est comparée à l'état de l'art connu en remplaçant ici l'ODA de l'Exemple 1 par un polymère stabilisant, selon la méthode de l'art antérieur, à base de ODA. La composition finale des MPR est globalement celle de l'Exemple 1 (12,5% en poids de stabilisant polymère ou de stabilisant monomère / total).

Synthèse de l'agent stabilisant polymère

Un copolymère de ODA et de GMA de rapport molaire 90/10 est synthétisé par polymérisation radicalaire en solution dans le toluène. Ce copolymère a été ensuite acrylé selon la méthode décrite dans l'Exemple 2. La masse molaire $\overline{Mw}$ du copolymère stabilisant déterminée par chromatographie par exclusion stérique est de 8700 g/mol. La fonctionnalité moyenne du copolymère est d'environ 2.2 C=C/chaîne. Le produit final est un solide fortement cristallin à température ambiante.

Synthèse de MPR avec l'agent stabilisant polymère décrit précédemment

La synthèse se déroule dans les mêmes conditions que pour l'Exemple 1. La composition est donnée ci-dessous :

| | |
|---|---|
| n-heptane | 94.5 g |
| propanol-2 | 94 g |
| polymère stabilisant précédemment décrit | 31.1 g |
| BA | 22 g |
| MMA | 3.4 g |
| GMA | 3.3 g |
| HDDA | 2.6 g |
| AIBN | 0.52 g |

La composition molaire globale finale des MPR est donc de :
ODA/BA/MMA/GMA/HDDA = 27/50/10/9/4% en mole

Elle correspond approximativement à la même composition molaire des MPR synthétisées avec l'agent stabilisant ODA seul, décrit dans l'Exemple 1.

La dispersion reste de faible viscosité durant toute la durée de la synthèse. La taille comme la masse des MPR est déterminée par SEC-MALLS : $\overline{Mw}$ = $3.10^5$ g/mol et $\overline{Rz}$ = 39 nm. Les MPR se présentent sous forme d'un solide cristallin à température ambiante.

Modification chimique par acrylation des MPR décrites précédemment

La modification chimique par acrylation s'est déroulée de la même façon que celle décrite dans l'Exemple 2. Après modification chimique, les MPR obtenues avaient une concentration en double liaisons acryliques réactives [C=C] = 3.5 $10^{-4}$ mol/g. L'aspect à température ambiante reste identique comme précédemment.

EXEMPLE 4

Caractérisation comparative

Les MPR de l'Exemple 1 et Exemple 2 avec le monomère stabilisant ODA d'une part et celles de l'Exemple 3 d'autre part, avec le polymère stabilisant à base de ODA sont comparées ici en termes de caractéristiques physiques et chimiques :

Analyse calorimétrique différentielle : température de fusion et de transition vitreuse

Les MPR sont caractérisées par analyse calorimétrique différentielle (DSC METTLER). Des échantillons d'environ 15 mg sont placés dans des creusets en aluminium. La vitesse de montée en température est de 10°C/min. sur une plage de température de -100 à +200°C. Les balayages sont effectués sous flux d'argon. Les MPR des Exemples 1 et 3 montrent un début de température de transition vitreuse, $T_g^{onset}$ = -20°C. La transition vitreuse est beaucoup moins prononcée pour les MPR synthétisées avec le polymère stabilisant. Elles sont toutes deux semi-cristallines. Les MPR synthétisées avec le monomère stabilisant ODA ont un pic de fusion $T_m$ = 27°C, pour une amplitude $\Delta H_m$ = 21 J/g. Les MPR synthétisées avec le polymère stabilisant à base de ODA ont un pic de fusion $T_m$ = 44°C, pour une amplitude $\Delta H_m$ = 44 J/g. Les MPR synthétisées avec le polymère stabilisant à base de ODA sont donc beaucoup plus cristallines que celles synthétisées avec le monomère stabilisant ODA, pour la même composition globale, du fait de la concentration locale élevée des motifs ODA.

Photopolymérisation du mélange MPR + monomère acrylate

Pour comparer les réactivités des MPR, des tests de photocalorimétrie différentielle sont réalisés.

Les MPR acrylées, des Exemples respectifs 2 et 3, sont mélangées à 10% en masse avec l'acrylate d'isobornyle IBOA. 1% en masse de photoamorceur 2,2-dimethoxy-2-phenylacetophenone est également additionné. Les mélanges sont préparés à température ambiante. La solution contenant les MPR synthétisées avec les polymères stabilisants à base de ODA est solide jusqu'à environ 15°C. Elle est opalescente jusqu'à 30°C environ et devient transparente et de faible viscosité pour des températures supérieures. La solution avec les MPR synthétisées avec le monomère stabilisant ODA reste liquide et de faible viscosité au moins pour une température ≥ 4°C et est toujours transparente. Ces différences proviennent de la très forte crtstallinité des MPR synthétisées avec le polymère stabilisant à base de ODA.

Environ 5 mg de chaque solution décrite ci-dessus sont placés dans des creusets en aluminium pour ces tests de photocalorimétrie différentielle. Les creusets sont placés dans un photocalorimètre type PERKIN ELMER type DSC 7 sous flux d'azote avec un isotherme à 50°C pendant 2 min. avant le début de l'irradiation UV pour assurer la stabilisation en température des échantillons, la purge du photocalorimètre ainsi que la fusion complète des parties cristallines. L'irradiation UV (λ = 350 nm) se déroule à 50°C pendant 20 min. pour atteindre la conversion maximale. La figure 1 ci-jointe présente la comparaison des résultats pour les deux types de MPR comparés. Le temps d'irradiation t = 0 s correspond au début de l'irradiation UV.

Cette figure démontre que les MPR synthétisées selon l'invention sont beaucoup plus réactives que celles obtenues selon la méthode courante de l'état de l'art à base de ODA. Cette différence de réactivité démontre que les fonctions réactives sont affectées par la présence du polymère stabilisant qui joue le rôle d'une barrière limitant l'accès à ces fonctions.

EXEMPLES 5-9 : voir tableau ci-dessous

| EX. | NATURE / COMPOSITION DES MPR | METHODE DE SYNTHESE / REMARQUES | CARACTERISTIQUES DES MPR | OBSERVATIONS |
|---|---|---|---|---|
| N°5 | Monomère A = 52% en mole d'IBOA + 30% en mole de ODA (octadécylacrylate)<br>Monomère B = 5% en mole de HDDA<br>Monomère D = 13% en mole de GMA | Exemple 1<br>Faible viscosité et transparence de la dispersion non aqueuse | $\overline{Mw}$ = 1,1 $10^5$ *g* / *mol*<br>$\overline{Rz}$ = 21*nm*<br>• 95% des MPR entre 10 et 25 nm<br>• MPR époxydées | • Aspect : cire à température ambiante<br>• MPR semi cristallines<br>Fusion Tm = 15°C<br>Transition vitreuse $Tg^{onset}$= 61°C |
| N°6 | Acrylation de MPR de l'exemple 5 | Exemple 2 | • [C = C] = 3,7 $10^{-4}$ mol/g<br>• MPR acrylées | • Conversion finale des groupes époxydes = 67% |

(suite)

| EX. | NATURE / COMPOSITION DES MPR | METHODE DE SYNTHESE / REMARQUES | CARACTERISTI-QUES DES MPR | OBSERVATIONS |
|---|---|---|---|---|
| N°7 | Monomère A = 52% en mole de IBOA + 30% en mole d'acrylate de lauryle<br>Monomère B = 5% en mole de HDDA<br>Monomère D = 13% en mole de GMA | Exemple 5<br>En remplaçant ODA par acrylate de lauryle ($C_{12}$) | $\overline{Mw}$ = 3,8 $10^5$ *g / mol*<br>$\overline{Rz}$ = 27*nm*<br>• MPR époxydées | • Liquide visqueux à température ambiante<br>• MPR amorphe : 2 transitions vitreuses $Tg^{onset}$ = 22°C et $Tg^{onset}$ = 62°C |
| N°8 | Monomère A = 52% en mole de IBOA + 30% en mole d'acrylate de docosanol<br>Monomère B = 5% en mole de HDDA<br>Monomère D = 13% en mole de GMA | Exemple 5<br>En remplaçant ODA par l'acrylate de docosanol (22) Faible viscosité et transparence de la dispersion | $\overline{Mw}$ = 3,5 $10^4$ g / mol<br>$\overline{Rz}$ = 19nm • MPR époxydées | • Aspect : solide à température ambiante<br>• MPR semi cristalline : $T_{fusion}$ = 36°C et $Tg^{onset}$ = 66°C |
| N°9 | Monomère A = 76% en mole de IBOA<br>Monomère B = 5% en mole de HDDA<br>Monomère D = 19% en mole de GMA | Exemple 5<br>Faible viscosité et transparence de la dispersion | $\overline{Mw}$ = 5,8 $10^5$ g / mol<br>$\overline{Rz}$ = 31nm<br>• MPR époxydées | • Aspect: solide à température ambiante<br>• MPR amorphe : $Tg^{onset}$ = 62°C |

EXEMPLE 10

Les MPR décrites dans l'Exemple 9 sont acrylées par réaction avec l'acide acrylique (AA), à 100°C, en présence d'un catalyseur de réaction, 0,8% en masse de diisopropyle salicylate de chrome III (CrDIPS), et de 0.3% en masse d'hydroquinone. A cause de la forte viscosité de ces MPR en masse à 100°C, la modification chimique se déroule à 50% en solution dans le toluène, dans un réacteur de 250 ml équipé d'un réfrigérant et d'une agitation mécanique et sous un léger flux d'azote. L'acide acrylique est introduit en léger excès par rapport aux groupes époxydes tel que [acide]/[époxy] = 1.05. En fin de modification chimique, les MPR sont séchées sous vide à 20 mbars à température ambiante. La conversion finale des groupes époxydes est de 95%, ce qui correspond à une concentration en double liaisons acryliques réactives de [C=C] = $9.1.10^{-4}$ mol/g. L'aspect est identique à celui des MPR décrites dans l'Exemple 9. Une fine poudre de MPR est finalement obtenue à température ambiante.

EXEMPLE 11

Un monomère stabilisant A, comportant une insaturation éthylénique et une deuxième fonction réactive f2 différente de l'insaturation éthylénique a été synthétisé. L'emploi de ce monomère stabilisant permet la synthèse de MPR portant des groupements réactifs f2 préférentiellement en surface.

Synthèse du monomère stabilisant doublement fonctionnalisé : f2 : - $CO_2H$

Le monomère stabilisant doublement fonctionnalisé est basé sur la condensation d'un anhydride alkenyl succinique avec l'acrylate hydroxyéthyle (HEA) selon le schéma suivant :

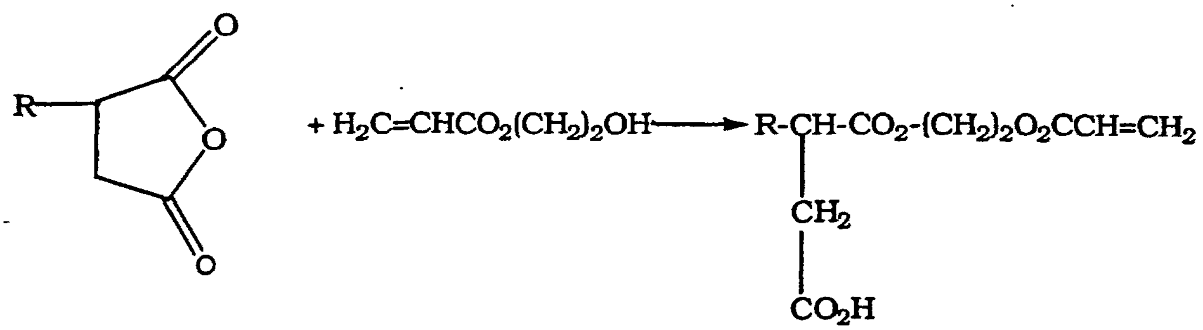

Le radical R- est un mélange équimolaire de $-CH_2CH=CH(CH_2)_{12}CH_3$ et de $-CH_2CH=CH(CH_2)_{14}CH_3$ correspondant à un mélange équimolaire d'anhydride n-hexadécényl succinique et d'anhydride n-octadécényl succinique, fourni par Pentagon sous l'appellation Pentasize 68. La condensation s'est effectuée en masse à 60°C, sous un léger flux d'azote. Dans ces conditions, le groupe carboxyle formé ne réagit pas. Après 9 h de réaction, le taux d'estérification est de 80%. Le produit synthétisé nommé AASA68 a une masse molaire théorique de 452 g/mol. AASA68 est un liquide transparent à température ambiante.

Synthèse de MPR avec le monomère stabilisant AASA68

La synthèse se déroule selon le procédé décrit dans l'Exemple 1. La composition des monomères est :

Monomère A = 30% en mole de AASA68 + 65% en mole de IBOA
Monomère B = 5% en mole de HDDA

La dispersion est de faible viscosité durant toute la synthèse et reste transparente. La taille et la masse molaire sont :

$\overline{Mw}$ = 1.8.$10^5$ g/mol et $\overline{Rz}$ = 20 nm

EXEMPLES 12-23 - voir tableau ci-dessous

| EX | NATURE / COMPOSITION DES MPR | METHODE DE SYNTHESE / REMARQUES | CARACTERISTIQUES DES MPR | OBSERVATIONS |
|---|---|---|---|---|
| N° 12 | Monomère A = 30% en mole de ODA<br>Monomère B = 5% en mole de HDDA<br>Monomère C = 65% en mole de BA | Exemple 1<br>Dispersion de faible viscosité et transparente | • MPR non fonctionnalisées | • Cire collante à température ambiante |
| N° 13 | Monomère A = 30% en mole de ODA<br>Monomère B = 5% en mole de HDDA<br>Monomère D = 65% en mole de AA | Exemple 1<br>Dispersion de faible viscosité et transparente | $\overline{Mw}$ = 9,0 $10^5$ g / mol<br>$\overline{Rz}$ = 30nm<br>• MPR carboxylées | • Aspect : solide à température ambiante, broyable en poudre fine<br>• MPR hydrosoluble après neutralisation des groupes carboxyles |
| N° 14 | Methacrylation des MPR de l'exemple 13 | Exemple 10 mais avec $\frac{[acide]}{[epoxy]}$ = 6,7 | • Taux de méthacrylation finale = 15%<br>• [C = C] = 6,4 $10^{-4}$ mol/g<br>• [COOH] = 3,5 $10^{-3}$ mol/g | • Aspect : solide à température ambiante, broyable en poudre fine |

(suite)

| EX | NATURE / COMPOSITION DES MPR | METHODE DE SYNTHESE / REMARQUES | CARACTERISTIQUES DES MPR | OBSERVATIONS |
|---|---|---|---|---|
| N° 15 | Monomère A = 76% en mole de IBOA<br>Monomère B = 5% en mole de HDDA<br>Monomère D = 19% en mole de HEMA | Exemple 9 En remplaçant GMA par HEMA | $\overline{Mw}$ = 7,5 $10^5$ g / mol<br>$\overline{Rz}$ = 32nm<br>• MPR hydroxylées | • Aspect : solide à température ambiante, broyable en poudre fine |
| N° 16 | Monomère A = 30% en mole de ODA + 55% en mole de IBOA<br>Monomère B = 5% en mole de HDDA<br>Monomère D = 10% en mole d'anhydride itaconique | Exemple 5 Avec n-heptane comme solvant Dispersion de faible viscosité et transparente | • MPR portant des fonctions anhydrides | |
| N° 17 | a)Monomère A = 30% en mole de ODA + 54% en mole de IBOA<br>Monomère B = 2,5% en mole de HDDA<br>Monomère D= 13,5% en mole de GMA | Exemple 1<br>Variation de B (2,5%)<br>Dispersion de faible viscosité et transparente | $\overline{Mw}$ = 2,4 $10^4$ g / mol<br>$\overline{Rz}$ = 22nm<br>• MPR époxydées | |
| N° 17 | b)Monomère A=30% en mole de ODA+ 48% en mole de IBOA<br>Monomère B = 10% en mole de HDDA<br>Monomère D = 12% en mole de GMA | Exemple 1<br>Variation de B (10%)<br>Idem 17a) mais légère augmentation de viscosité | $\overline{Mw}$ = 4,2 $10^4$ g / mol<br>$\overline{Rz}$ = 54nm<br>• MPR époxydées | |
| N° 18 | Monomère A = 30% en mole de ODA<br>Monomère B = 5% en mole de HDDA<br>Monomère C = 52% en mole de BA<br>Monomère D = 13% en mole de GMA | Exemple 1<br>Dispersion de faible viscosité et transparente | $\overline{Mw}$ =1,3 $10^5$ g / mol<br>$\overline{Rz}$ = 22nm<br>• MPR époxydées | • Cire collante à température ambiante<br>• MPR semi cristalline $T_{fusion}$ = 27°C et $Tg^{onset}$ = -27°C |
| N° 19 | Acrylation des MPR de l'exemple 18 | Exemple 2 | • Taux d'acrylation = 35%<br>• [C = C] = 2,4 $10^{-4}$ mol/g<br>• [epoxy] = 4,5 $10^{-4}$ mol/g<br>• MPR acrylées | • MPR de double fonctionnalité : époxy + acrylate |
| N° 20 | a) Idem exemple 9 | Exemple 5<br>Avec concentration en polymérisables = 15% en poids | $\overline{Mw}$ = 4,0 $10^4$ g / mol<br>$\overline{Rz}$ = 13nm<br>• MPR époxydées | • Dispersion de faible viscosité et transparente |
| | b) Idem exemple 9 | Exemple 5<br>Avec concentration en polymérisables = 30% | • MPR époxydées | • Dispersion transparente avec légère augmentation de viscosité |

(suite)

| EX | NATURE / COMPOSITION DES MPR | METHODE DE SYNTHESE / REMARQUES | CARACTERISTIQUES DES MPR | OBSERVATIONS |
|---|---|---|---|---|
| N° 21 | a) Idem exemple 5 | Exemple 5 avec solvant : n-heptane | $\overline{Mw}$ = 3.5 $10^6$ g / mol<br>$\overline{Rz}$ = 56nm<br>• MPR époxydées | • Viscosité augmente lors de la synthèse, et dispersion opalescente |
| | b) Idem exemple 5 - | Exemple 5 avec solvant : propanol-2 | $\overline{Mw}$ = 1,3 $10^5$ g / mol<br>$\overline{Rz}$ = 33nm<br>• MPR époxydées | • Dispersion opalescente avec faible viscosité |
| | c) Idem exemple 5 | Exemple 5 avec solvant : mélange n-heptane / propanol-2 25/75 en masse | $\overline{Mw}$ = 8,6 $10^4$ g / mol<br>$\overline{Rz}$ = 25 nm<br>• MPR époxydées | • Dispersion transparente avec très faible viscosité |
| N° 22 | Monomère A = 20% en mole de ODA et 20% en mole de méthacrylate d'octadécyle<br>Monomère B = 5% en mole de HDDA<br>Monomère C = 40% en mole de méthacrylate de méthyle Monomère D = 15% en mole de CMA | Exemple 1 | $\overline{Mw}$ = 8,6 $10^6$ g / mol<br>$\overline{Rz}$ = 50nm<br>• MPR époxydées | |
| N° 23 | A : Acrylate de Cardura E10 : 20% mol<br>B : HDDA : 5% mol<br>C : acrylate de butyle : 55% mol<br>D : acrylate de 2-(2-hydroxyéthyl) : 20% mol | Exemple 1 | $\overline{Mw}$ = 260000<br>$\overline{Rz}$ = 29 *nm*<br>• MPR hydroxylées | |

EXEMPLE 24

Procédé en continu

Les microparticules MPR sont synthétisées dans un mélange de n-heptane et de propanol-2 (à 50/50 en masse), avec une concentration en monomères de 25% en poids. La stabilisation est assurée par l'acrylate d'octadécyle (ODA). Les monomères (méth)acryliques sont introduits en continu pour réduire les dérives de composition, au cours de la synthèse, des MPR formées.

Un mélange de solvants (I), 56,5 g de n-heptane et 56 g de propanol-2 est introduit dans un réacteur agité de 500 ml équipé d'un réfrigérant et sous un léger flux d'azote. La température est portée à 70°C et stabilisée à ± 1°C.

Un mélange (II) présenté ci-dessous de solvants, de monomères (méth)acryliques et d'amorceur, est préparé dans un ballon de 500 ml à température ambiante et sous un léger flux d'azote :

n-heptane = 56,0 g
propanol-2 = 56,5 g
Monomères A = ODA = 39,8 g (30% en moles / total monomères)
Monomère B = HDDA = 4, 7 g (5% molaire)
Monomère C = MMA = 18,4 g (45% molaire)
Monomère D = GMA = 11,6 g (20% molaire)
Amorceur : AIBN = 0,66 g (10 mmol/L / total monomères)

Le mélange (II) est introduit en continu, à l'aide d'une pompe, dans le réacteur contenant le mélange (I) à 74°C. La durée d'introduction de (II) s'étale sur 3 h. La réaction se déroule à 70°C sans exothermie significative. A la fin de l'introduction du mélange (II), une post-réaction a lieu à 70°C pendant 4 h. La dispersion reste transparente, homogène et de faible viscosité durant toute la durée de la synthèse. Les MPR formées sont isolées par distillation des solvants de synthèse comme décrit dans l'exemple 1. Les MPR obtenues sont solides à température ambiante et peuvent être broyées en poudre fine. Les techniques de caractérisation décrites dans l'exemple 1 sont utilisées pour déterminer : $\overline{Mw}$ = 1.3.$10^6$ g/mol et $\overline{Rz}$ = 41 nm. Les MPR obtenues portent des fonctions époxydes avec un taux d'époxy de : 1.1.$10^{-3}$ mol/g.

EXEMPLE 25

Le procédé de l'Exemple 24 est utilisé pour des MPR de composition suivante :

Monomères A : 25% en mole de ODA + 35% en mole de IBOA
Monomère B : 5% en mole de diméthacrylate de polyéthylène glycol (M = 600)
Monomère C : 20% en mole de monométhylacrylate méthyl éther de polyéthylène glycol (M = 1000)
Monomère D : 15% en mole de GMA

La dispersion reste transparente et de faible viscosité durant la synthèse. Caractéristiques mesurées :

$\overline{Mw}$ = 2.3.$10^6$ g/mol et $\overline{Rz}$ = 39 nm

Ces MPR ont la particularité d'être hydrodispersibles.

EXEMPLE 26

Les MPR décrites dans l'Exemple 25 sont acrylées suivant l'Exemple 2. Le taux d'acrylation des groupes époxydes est de 95%, ce qui correspond à un taux de double liaisons acryliques réactives de [C=C] = 3.6.$10^{-4}$ mol/g.

EXEMPLE 27

Procédé en deux étapes successives : discontinue + continue

Les MPR sont synthétisées dans un mélange de n-heptane et de propanol-2. Les monomères (méth)acryliques sont introduits étape par étape, afin d'obtenir des MPR avec une structure contrôlée.

Un mélange (I), comme décrit ci-dessous, de solvants, des monomères acryliques et d'amorceur radicalaire est introduit dans un réacteur agité de 500 ml équipé d'un réfrigérant et sous un léger flux d'azote. La température est portée à 70°C et stabilisée à ± 1°C.

n-heptane = 84,5 g
propanol-2 = 84,5 g
Monomères A = ODA = 28,9 g (30% en moles / total monomères de (I))
Monomère B = HDDA = 0,83 g (1% molaire / total monomères de (I))
Monomère C = BA = 26,2 g (69% molaire / total monomères de (I))
Amorceur : AIBN = 0,66 g (10 mmol/L sur total des monomères)

La réaction se déroule pendant 2 h à 70°C sans exothermie significative. La dispersion reste transparente et homogène, de faible viscosité durant toute cette période. A la fin des 2 h de réaction, un mélange (II) de solvants et de monomères (méth)acryliques, de composition donnée ci-dessous, est introduit dans un ballon de 500 ml à température ambiante et sous un léger flux d'azote, puis introduit en continu dans le réacteur contenant le mélange (I) :

n-heptane = 28,2 g
propanol-2 = 28,2 g
Monomères A = IBOA = 15,6 g (80% en mole / total monomères (II))
Monomère B = HDDA = 1,1 g (5% molaire / total monomères (II))
Monomère D = GMA = 2,0 g (15% molaire / total monomères (II))

L'introduction de (II) s'étale sur 3 h, à 70°C, sans exothermie significative. A la fin de l'introduction du mélange (II), une post-réaction à 70°C a lieu pendant 2 h. La dispersion reste transparente, homogène et de faible viscosité durant toute la durée de la synthèse. Les MPR obtenues sont isolées et caractérisées suivant la méthode et techniques

décrites dans l'exemple 1. Caractéristiques mesurées :

$\overline{Mw}$ = 1.6.$10^4$ g/mol et $\overline{Rz}$ = 18 nm

Grâce aux groupes époxydes introduits par GMA, les MPR synthétisées portent des fonctions réactives, époxydes et préférentiellement en surface.

EXEMPLE 28

Application revêtements

Des MPR décrites précédemment sont utilisées dans des revêtements réticulables.

Réticulation par photopolymérisation radicalaire

Une formulation est préparée à température ambiante en mélangeant :

2,85 g de MPR décrites dans l'Exemple 10
4,66 g de IBOA
1,99 g d'acrylate d'éthoxy éthoxy éthyle (EEEA)
0,20 g de Irgacure 184
0,30 g de Darocur 1173

Le mélange obtenu est transparent, homogène et de faible viscosité. A partir de ce mélange, un film de 125 µm d'épaisseur est déposé sur une plaque de verre. Ce film est photopolymérisé par 8 passages successifs à 5 m/min. sous une lampe UV de forte puissance (lampe FUSION type H, 120 W/cm). Après réticulation, le film est transparent et dur. Il présente un excellent compromis dureté/flexibilité.
Un test de traction effectué sur ces films à 21°C à une vitesse de déformation de 1 mm/min donne une déformation à la rupture de 65% et une contrainte à la rupture de 12 MPa et un module de Young E = 130 MPa.

EXEMPLE 29

Application revêtements

Réticulation par photopolymérisation cationique

Une formulation est préparée à 50°C, contenant :

0,97 g de MPR décrites dans l'Exemple 15
8,73 g d'époxy cycloaliphatique SARCAT K126
0,30 g de photoinitiateur SARCAT KI85

La solution obtenue est transparente, homogène et de faible viscosité à 50°C. Un film de cette solution de 125 µm d'épaisseur est déposé sur une plaque de verre. Ce film est photopolymérisé par 10 passages successifs à 3 m/min. sous une lampe UV de forte puissance (lampe FUSION type H, 120 W/cm). Une post-réaction a lieu en étuve à 105°C pendant 2 h. Après réticulation, le film est transparent et dur. Il présente une bonne souplesse et un bon aspect. -

EXEMPLE 30

Application revêtements

Réticulation par polymérisation radicalaire thermique

Une formulation contenant :

1,98 g de MPR décrites dans l'Exemple 6
7,92 g de IBOA

0,10 g de AIBN

est préparée à température ambiante. La solution obtenue est transparente, homogène et de faible viscosité. Un film de cette solution de 125 µm d'épaisseur est déposé sur une plaque de verre. Ce film est polymérisé thermiquement à 80°C pendant 2 h. Après réticulation, le film est transparent et dur. Le film libre présente une bonne flexibilité.

EXEMPLE 31

Application revêtements

Réticulation par polymérisation radicalaire thermique d'un MPR hydrodispersé

Une formulation est préparée à température ambiante contenant :

2,00 g de MPR décrites dans l'Exemple 26
8,00 g d'eau

Après mélange, la solution obtenue est laiteuse, stable et d'assez faible viscosité. Un film de cette solution de 100 µm d'épaisseur est déposé sur une plaque de verre. L'eau est évaporée à 70°C pendant 1 h puis le film est polymérisé thermiquement à 140°C pendant 4 h. Après réticulation, le film libre est transparent, dur et assez flexible.

EXEMPLE 32

Application revêtements

Polymérisation thermique par polycondensation entre fonction hydroxyle et fonction isocyanate bloqué

Un mélange contenant :

6,0 g de MPR décrites dans l'Exemple 15
2,0 g du trimère du HDI bloqué par un phénol -

est effectué en broyant ensemble, finement, les deux produits à température ambiante. L'analyse calorimétrique différentielle de ce mélange est effectuée en plaçant un échantillon de 15 mg dans un creuset en aluminium. La vitesse de montée en température est de 10°C/min. Une exothermie est observée à partir de 120°C, avec un maximum relevé à 170°C. Il correspond à la réaction OH/NCO bloqué. A la fin de la réaction, est obtenu un solide, dur avec une Tg = 52°C.

EXEMPLE 33

Application revêtements

Polymérisation thermique par polycondensation entre fonction époxyde et fonction carboxyle

Un mélange contenant :

3,0 g de MPR décrites dans l'Exemple 9
7,0 g de polyester saturé fonctionnalisé carboxyle et contenant un catalyseur de la réaction époxy/acide (REAFREE 6803 commercialisé par Cray Valley Ibérica)

est effectué en broyant ensemble, finement, les deux produits à température ambiante. Ce mélange est déposé en fine couche dans une coupelle en aluminium, qui est placée dans une étuve. La température est progressivement augmentée jusqu'à 160°C, avec maintien en isotherme pendant 2 h. Après retour à température ambiante, est obtenu un film d'environ 1 mm d'épaisseur, dur, transparent et homogène.

EXEMPLE 34

Application revêtements

Polymérisation thermique par polycondensation entre fonction carboxyle et fonction époxyde

Un mélange contenant :

3,0 g de MPR décrites dans l'Exemple 13
7,0 g de diglycidyl éther du bisphénol A (DGEBA, DER 662, poids équivalent époxy = 650)
0,2 g de catalyseur de la réaction époxy/acide CrDIPS

est effectué en broyant finement ensemble, les produits à température ambiante. Le mélange est déposé en fine couche dans une coupelle en aluminium et soumis aux conditions de réaction décrites dans l'exemple 33 avec un maintien en isotherme pendant 2 h. Après retour à température ambiante, est obtenu un film d'environ 1 mm d'épaisseur, dur, transparent et homogène.

EXEMPLE 35

Application revétements

Polymérisation thermique par polymérisation radicalaire

Un mélange contenant :

3,0 g de MPR décrites dans l'Exemple 14
7,0 g de polyester saturé fonctionnalisé acrylate (REAFREE ND-1530 commercialisé par Cray Valley Ibérica)

est effectué en broyant ensemble, finement, les deux produits à température ambiante. Dans les mêmes conditions de réaction que les exemples 33 et 34, on obtient un film d'environ 1 mm d'épaisseur, dur, transparent et homogène.

EXEMPLE 36

Applications moulage

Certaines des MPR précédemment décrites sont incorporées dans des compositions « de moulage ».

Polymérisation thermique par polycondensation entre fonction époxyde et fonction amine

17,0 g de MPR décrites dans l'Exemple 18 et 68,1 g de diglycidyl éther du bisphénol A (DGEBA, n = 0,15) ont été mélangés à 135°C. La solution obtenue est homogène de très faible viscosité. 35,0 g de 4,4'-méthylènebis (3-chloro-2,6-diéthylaniline) (MCDEA) sont mélangés pendant 3 min., puis le mélange est coulé dans un moule métallique téflonné et placé en étuve. La cuisson s'effectue d'abord à 135°C pendant 14 h, puis à 190°C pendant 4 h. Après retour à l'ambiante, la plaque obtenue est opaque mais avec une répartition homogène des MPR, et possède une ténacité, mesurée par le paramètre $K_{1c}$, augmentée de 33% ($K_{1c}$ sans microparticules de : 0,6 MPa.m$^{1/2}$ et avec les microparticules : 0,8 MPa.m$^{1/2}$).

EXEMPLE 37

Application moulage

Une autre formulation est effectuée en mélangeant 17,0 g de MPR décrites dans l'Exemple 19 et 71,0 g de diglycidyl éther du bisphénol A (DGEBA, n = 0,15). On obtient alors une solution homogène de très faible viscosité. 36,0 g de MCDEA sont alors mélangés pendant 3 min., puis le mélange est coulé dans un moule métallique téflonné et placé en étuve. La cuisson s'effectue comme pour l'exemple 36. La plaque obtenue est opaque mais avec une répartition homogène des MPR et possède une ténacité, mesurée par le paramètre $K_{1c}$, améliorée de 50% ($K_{1c}$ sans microparticules de : 0,6 MPa.m$^{1/2}$ et avec les microparticules de : 0,9 MPa.m$^{1/2}$) en conservant une température de

transition mécanique $T_\alpha$ constante de 183°C.

EXEMPLE 38

Application moulage

Une autre formulation est réalisée en mélangeant 10,8 g de MPR décrites dans l'Exemple 14 et 42,9 g de diglycidyl éther du bisphénol A (DGEBA, n = 0,15) à 135°C. La solution obtenue est homogène et de faible viscosité. 21,3 g de MCDEA sont mélangés pendant 3 min., puis le mélange est moulé et cuit comme décrit dans les exemples 36 et 37. La plaque obtenue est transparente et homogène et possède une ténacité, mesurée par le paramètre $K_{1c}$, améliorée de 100% ($K_{1c}$ sans microparticules de : 0,6 MPa.m$^{1/2}$ et avec les microparticules de : 1,2 MPa.m$^{1/2}$).

EXEMPLE 39

Effet rhéologique

Un comportement rhéologique remarquable est observé pour des solutions contenant des MPR précédemment décrites.

Diminution de viscosité par rapport aux polymères linéaires

Des mesures de viscosité intrinsèque sont réalisées à 30°C avec un rhéomètre à capillaire sur des mélanges de solvant non réactif, comme par exemple le toluène, et de MPR synthétisées selon le procédé décrit dans l'Exemple 5 et de composition :

Monomères A : 30% en mole de ODA + 52% en mole de IBOA
Monomère B : 5% en mole de HDDA
Monomère D : 13% en mole de GMA

et de masse molaire variant de 2.10$^4$ à 5.10$^6$ g/mol. Le coefficient « a » de Mark-Houwink reliant la viscosité intrinsèque à la masse molaire des polymères par la relation $[\eta] = k\overline{Mw}^a$ a été déterminé : a = 0,21. Cette valeur a été comparée à celle obtenue avec un polyacrylate linéaire de formulation BA/GMA/MMA = 75/11/14% en mole, de masse molaire variant de 1.2.10$^4$ à 6.5.10$^4$ g/mol, dans les mêmes conditions que celles décrites ci-dessus. La valeur du paramètre de Mark-Houwink est : a = 0,9. On confirme donc la viscosité beaucoup plus faible des MPR en comparaison aux polymères linéaires pour une masse molaire identique, grâce à leur structure très compacte.

Un comportement équivalent est observé dans la plupart des solvants réactifs, comme le styrène, les monomères (méth)acryliques.

EXEMPLE 40

Effet rhéofluidifiant et thixotrope des solutions de MPR

Des mesures de viscosité sont réalisées à 40°C avec un rhéomètre de type cône/plan en régime statique avec un appareil Rheometrics Dynamic Analyser RDA II. La vitesse de cisaillement varie de 0,1 à 5000 s$^{-1}$. Les MPR décrites dans l'Exemple 9 sont mélangées à un solvant non réactif, comme par exemple au xylène, dans des proportions massiques variant de 10 à 80%. Les solutions sont de faible viscosité même pour des concentrations élevées en MPR. Pour des concentrations en MPR supérieures à 30% en poids, les solutions deviennent rhéofluidifiantes. Pour un mélange à 40% en poids de MPR par exemple, la viscosité mesurée à 0,2 s$^{-1}$ est 500 fois supérieure à celle mesurée à 1000 s$^{-1}$. De plus, ces systèmes sont thixotropes et montrent une hystérésis entre la montée et la descente en vitesse de cisaillement. Cette hystérésis est d'autant plus grande que la concentration en MPR est élevée.

Un comportement équivalent est observé dans la plupart des solvants réactifs, comme le styrène, les monomères (méth)acryliques.

## Revendications

1. Microparticules réticulées de taille entre 10 et 300 nm obtenues par polymérisation en dispersion en milieu non aqueux non solvant du polymère formé, à partir d'une composition de composés polymérisables éthyléniquement

insaturés, lesdites microparticules étant **caractérisées en ce que** ladite composition des composés éthyléniquement insaturés comprend :

- au moins un monomère A, comportant une seule insaturation éthylénique polymérisable par voie radicalaire, conférant aux microparticules formées dans ledit milieu non aqueux, une autostabilisation pendant et après polymérisation, sans aucune addition de polymère ayant une fonction d'agent stabilisant, ni avant ni pendant ni après polymérisation, le monomère A étant défini par la formule générale (I) suivante :

$$CH_2=CR_1\text{-}X\text{-}(R_2\text{-}Y)_k\text{-}R \quad (I)$$

avec $R_1$ = H, $CH_3$
X = ester-(C=O)O-, amide-(C=O) $N(R_3)$-,
Y = ester-O(O=C)-, amide -$(R_3)$N(C=O)-, uréthane -O(O=C)NH-
$R_2$ = radical alkylène en $C_2$-$C_6$, pouvant être substitué par des groupements fonctionnels tels que OH
$R_3$ = alkyl en $C_1$ à $C_6$, H
k = 0 ou 1
R = radical alkyle, alkényle linéaire ou ramifié en $C_8$-$C_{22}$ ou aralkyle, substitué ou non sur le cycle aromatique, en $C_8$-$C_{22}$, ou radical alicyclique, mono ou polycyclique substitué ou non en $C_6$-$C_{22}$, pouvant comporter une fonction réactive f2 sélectionnée parmi : acide ou anhydride carboxylique, hydroxy, époxy, isocyanate, silane.
- au moins un composé B comportant au moins deux insaturations éthyléniques polymérisables par voie radicalaire, le composé B étant sélectionné parmi les monomères et/ou oligomères éthyléniquement multifonctionnels de fonctionnalité en insaturations polymérisables par voie radicalaire d'au moins 2, avec lesdits monomères étant choisis parmi : les di(méth)acrylates d'éthylène glycol, de propylène glycol, de butane diol, de méthyl-2 propane diol, de néopentyl glycol, d'hexane diol, de zinc et/ou de calcium ou les divinyl benzènes substitués ou non substitués, les tri(méth)acrylates de glycérol, de triméthylol propane et/ou dérivés alkoxylés, les tri- ou tetra(méth)acrylates de pentaerythritol et les penta- ou hexa(méth)acrylates de dipentaérythritol et lesdits oligomères étant choisis parmi : les esters (méth)acryliques d'oligomères polyols, les polyesters insaturés ou les oligomères acryliques (méth)acrylés, de fonctionnalité allant de 2 à 50 et avec Mn inférieure à 2500

et en option :

- au moins un composé C comportant une seule insaturation éthylénique polymérisable par voie radicalaire différent de A

et/ou

- au moins un composé D différent de A, de B et de C et comportant au moins une insaturation éthylénique polymérisable par voie radicalaire et au moins une deuxième fonction réactive f1 différente d'une insaturation éthylénique.

2. Microparticules selon la revendication 1 **caractérisées en ce que** la composition des composés polymérisables éthyléniquement insaturés comprend :

   - 5-99% en moles du ou des monomères A
   - 0,02-30% en moles du ou des composés B

   et en option :

   - 0-80% en moles du ou des composés C
   - 0-80% en moles du ou des composés D

   avec les % molaires de A et B et éventuellement de C et/ou D choisis dans les limites ci-dessus définies, de telle manière que leur somme soit égale à 100% par rapport à la composition des tous les composés présents polymérisables.

3. Microparticules selon l'une des revendications 1 ou 2 **caractérisées en ce que** le monomère A est choisi parmi :

l'isobornyl (méth)acrylate, le norbornyl (méth)acrylate, le lauryl (méth)acrylate, l'octadécyl (méth)acrylate, le docosanyl (méth)acrylate, le dicyclopentadiényl (méth)acrylate, le cyclohexyl (méth)acrylate et l'éthyl 2-hexyl (méth) acrylate ou le (méth)acrylate de Cardura E10 ou le (méth)acrylate de tridécyl ou le (méth)acrylate d'isodécyle.

**4.** Microparticules selon l'une des revendications 1 à 3 **caractérisées en ce que** les composés B, C, D sont des monomères et/ou oligomères et que le rapport pondéral entre la somme de composés polymérisables et le solvant non aqueux est compris entre 10/90 et 50/50 et plus préférentiellement entre 15/85 et 30/70.

**5.** Microparticules selon l'une des revendications 1 à 4 **caractérisées en ce que** le composé C est sélectionné parmi les monomères (méth)acryliques, vinyl aromatiques et esters vinyliques et les oligomères (méth)acrylés de $\overline{Mn}$ inférieure à 2500.

**6.** Microparticules selon la revendication 5 **caractérisées en ce que** les monomères (méth)acryliques sont sélectionnés parmi les (méth)acrylates de méthyle, d'éthyle, de propyle, de butyle, de tertiobutyle, les monomères vinyl aromatiques parmi le styrène, vinyl toluène, et les oligomères (méth)acrylés parmi les (méth)acrylates d'oligomères alcools monofonctionnels de $\overline{Mn}$ inférieure à 1500.

**7.** Microparticules selon l'une des revendications 1 à 6 **caractérisées en ce qu'**elles portent des fonctions réactives f1 apportées par au moins un composé D et/ou des fonctions réactives f3 introduites par la modification chimique au moins partielle desdites fonctions réactives f1 après l'étape de polymérisation.

**8.** Microparticules selon l'une des revendications 1 à 7 **caractérisées en ce que** les fonctions réactives f1 apportées par au moins un composé D sont sélectionnées parmi : l'acide et/ou anhydride carboxylique, l'hydroxy, l'époxy, l'isocyanate, le silane ou l'amine ou oxazoline telles qu'elles ne puissent pas réagir entre elles lors de la polymérisation.

**9.** Microparticules selon la revendication 8 **caractérisées en ce qu'**après modification chimique, suivant l'étape de polymérisation, ces

**10.** Microparticules selon l'une des revendications 1 à 9 **caractérisées en ce qu'**elles comportent en surface des fonctions réactives f2 telles que définies dans la revendication 1 et/ou des fonctions f4 obtenues par modification chimique adéquate des fonctions f2, après polymérisation. microparticules portent au moins partiellement des fonctions f3, par modification au moins partielle des fonctions f1, sélectionnées parmi les fonctions acrylates, méthacrylates, vinyles, esters ou amides à chaîne grasse insaturée en $C_{12}$-$C_{22}$, maléates et/ou maléimides, esters dérivés d'alcools allyliques ou insaturations cycloaliphatiques à base de dicyclopentadiène ou de cycle tétrahydrophtalique ou sels d'acide carboxylique.

**11.** Microparticules selon la revendication 10 **caractérisées en ce que** les fonctions f4 sont des fonctions acrylates, méthacrylates, esters ou amides à chaîne grasse insaturée en $C_{12}$-$C_{22}$, des maléates et/ou maléimides, ou esters dérivés d'alcools allyliques ou insaturations cycloaliphatiques à base de dicyclopentadiène ou de cycle tetrahydrophtalique, ou sels d'acide carboxylique.

**12.** Microparticules selon l'une des revendications 1 à 11 **caractérisées en ce que** ledit oligomère ester (meth)acrylique d'oligomère polyol dudit composé B est à base de polyéthers, comportant des motifs éthers choisis parmi l'oxyéthylène et/ou oxypropylène et/ou oxytetraméthylène, ou à base de polyesters saturés, ou à base de polyuréthanes.

**13.** Microparticules selon l'une des revendications 1 à 12 **caractérisées en ce que** la polymérisation a été réalisée en plusieurs étapes successives, avec des compositions de composés polymérisables identiques ou différentes pour chaque étape.

**14.** Microparticules selon l'une des revendications 1 à 13 **caractérisées en ce que** la composition des composés éthyléniquement insaturés telle que définie dans la revendication 1 comprend :

- 0-30% en moles d'octadécyl (méth)acrylate et/ou 5-80% en moles d'isobornyl (méth)acrylate comme monomère(s) A
- 0,02-30% en moles de di(méth)acrylate d'héxane diol en tant que composé B
- 0-50% en moles de styrène et/ou de (méth)acrylate de méthyle et/ou de butyle ou de tertiobutyle, comme

composé C
- 0-50 % en moles de (méth)acrylate de glycidyle comme composé D,

avec les % molaires de A, B, C, D sélectionnés de telle manière que leur somme soit égale à 100% de la composition des composés polymérisables et avec les fonctions réactives glycidyles pouvant être modifiées au moins partiellement par réaction avec un acide ou anhydride éthyléniquement insaturé.

**15.** Procédé de préparation de microparticules réticulées telles que définies à l'une des revendications 1 à 14 comprenant une étape de polymérisation en dispersion, en milieu non aqueux non solvant du polymère formé, d'une composition de composés polymérisables éthyléniquement insaturés **caractérisé en ce que** l'étape de polymérisation est réalisée sur une composition comprenant :

- au moins un monomère A, comportant une seule insaturation éthylénique polymérisable par voie radicalaire et conférant aux microparticules formées dans ledit milieu non aqueux une autostabilisation pendant et après la polymérisation, sans aucune addition de polymère agent stabilisant, ni avant ni pendant ni après la polymérisation en dispersion, avec ledit monomère A se trouvant préférentiellement greffé à la couche extérieure et plus préférentiellement à la surface des microparticules ainsi obtenues, le monomère A étant défini par la formule générale (I) suivante :

$$CH_2=CR_1-X-(R_2-Y)_k-R \quad (I)$$

avec $R_1$ = H, $CH_3$
X = ester-(C=O)O-, amide-(C=O) N($R_3$)-,
Y = ester-O(O=C)-, amide -($R_3$)N(C=O)-, uréthane -O(O=C)NH-
$R_2$ = radical alkylène en $C_2$-$C_6$, pouvant être substitué par des groupements fonctionnels tels que OH
$R_3$ = alkyl en $C_1$ à $C_6$, H
k= 0 ou 1
R = radical alkyle, alkényle linéaire ou ramifié en $C_8$-$C_{22}$ ou aralkyle, substitué ou non sur le cycle aromatique, en $C_8$-$C_{22}$, ou radical alicyclique, mono ou polycyclique substitué ou non en $C_6$-$C_{22}$, pouvant comporter une fonction réactive f2 sélectionnée parmi : acide ou anhydride carboxylique, hydroxy, époxy, isocyanate, silane
- au moins un composé B, comportant au moins deux insaturations éthyléniques polymérisables, le composé B étant sélectionné parmi les monomères et/ou oligomères éthyléniquement multifonctionnels de fonctionnalité d'au moins 2, avec lesdits monomères étant choisis parmi : les di(méth)acrylates d'éthylène glycol, de propylène glycol, de butane diol, de méthyl-2 propane diol, de néopentyl glycol, d'hexane diol, de zinc et/ou de calcium ou les divinyl benzènes substitués ou non substitués, les tri(méth)acrylates de glycérol, de triméthylol propane et/ou dérivés alkoxylés, les tri- ou tetra(méth)acrylates de pentaerythritol et les penta- ou hexa (méth)acrylates de dipentaérythritol et lesdits oligomères étant choisis parmi : les esters (méth)acryliques d'oligomères polyols, les polyesters insaturés ou les oligomères acryliques (méth)acrylés, de fonctionnalité allant de 2 à 50 et avec Mn inférieure à 2500

et en option et suivant les cas :

- au moins un composé C, comportant une seule insaturation éthylénique polymérisable, différent de A et/ou
- au moins un composé D différent de A, B, C, comportant au moins une insaturation éthylénique polymérisable et au moins une deuxième fonction f1 réactive différente de l'insaturation éthylénique

**16.** Procédé selon la revendication 15 **caractérisé en ce que** le monomère A est choisi parmi : l'isobomyl (méth) acrylate, le norbomyl (méth)acrylate, le lauryl (méth)acrylate, l'octadécyl (méth)acrylate, le dacosanyl (méth)acrylate, le dicyclopéntadienyl (méth)acrylate, cyclohexyl (méth)acrylate ou l'éthyl-2 héxyl (méth)acrylate ou le (méth) acrylate de Cardura E10, le (méth)acrylate de tridécyle ou le (méth)acrylate d'isodécyle.

**17.** Procédé selon l'une des revendications 15 ou 16 **caractérisé en ce que** les composés B, C, D sont des monomères et/ou des oligomères tels que définis à l'une des revendications 1, 4, 5, 7 et que le rapport pondéral entre la somme de composés polymérisables A, B, C, D et le solvant non aqueux est de 10/90 à 50/50 et plus préférentiellement de 15/85 à 30/70.

**18.** Procédé selon l'une des revendications 15 à 17 **caractérisé en ce que** le milieu non aqueux comprend au moins un solvant sélectionné parmi les alcanes en $C_6$-$C_{10}$ et/ou les alcanols en $C_3$-$C_5$ et de préférence parmi les hexanes, heptanes, cyclohexanes, octanes, nonanes, isopropanol, butanol, pentanol.

**19.** Procédé selon l'une des revendications 15 à 18 **caractérisé en ce que** le milieu non aqueux est constitué d'un mélange de n-heptane /isopropanol dans un rapport pondéral allant de 0/100 à 75/25 et de préférence de 25/75 à 50/50.

**20.** Procédé selon l'une des revendications 15 à 19 **caractérisé en ce que** l'étape de polymérisation est réalisée après une étape préalable de dispersion dans le milieu de microparticules, insolubles dans ce milieu, organiques ou minérales choisies parmi les pigments organiques ou minéraux, les charges ou additifs organiques ou minéraux et/ou des microparticules selon les revendications 1 à 14 insolubles dans ce milieu.

**21.** Procédé selon l'une des revendications 15 à 20 **caractérisé en ce qu'**il comprend une étape supplémentaire de récupération des microparticules formées par évaporation des solvants.

**22.** Procédé selon l'une des revendications 15 à 21 **caractérisé en ce que** l'étape de polymérisation est réalisée par addition continue et/ou discontinue de la composition des composés polymérisables en une ou plusieurs étapes successives, et avec des compositions introduites par étape, identiques ou différentes d'une étape à l'autre.

**23.** Procédé selon l'une des revendications 15 à 22 **caractérisé en ce que** l'étape de polymérisation est réalisée par addition continue des composés polymérisables et de préférence d'au moins du monomère A lorsque le monomère A a une réactivité sensiblement différente par rapport à celle des autres composés polymérisables.

**24.** Procédé selon l'une des revendications 15 à 22 **caractérisé en ce que** lorsque le monomère A a une réactivité sensiblement différente par rapport à celle des autres composés polymérisables, l'étape de polymérisation concernée est réalisée en discontinu sous condition de présence d'au moins un deuxième monomère A qui a une réactivité telle que la réactivité moyenne des monomères A est proche de la réactivité moyenne des autres composés polymérisables.

**25.** Procédé selon l'une des revendications 15 à 24 **caractérisé en ce que**, dans le cas où la composition des composés polymérisables comprend un composé D tel que défini à la revendication 1 ou 7 ou un monomère A tel que défini à la revendication 1 comportant sur le radical R une fonction f2, ledit procédé comprend en outre, après l'étape de polymérisation, une étape supplémentaire de modification chimique au moins partielle des fonctions réactives f1 en fonctions f3 et/ou éventuellement des fonctions réactives f2 en fonctions f4.

**26.** Composition de revêtement ou de moulage **caractérisée en ce qu'**elle contient ou est constituée des microparticules telles que définies à l'une des revendications 1 à 14 comme composants réactifs ou non réactifs.

**27.** Compositions de revêtements ou de moulage ou de composites réticulables **caractérisées en ce qu'**elles contiennent des microparticules telles que définies à l'une des revendications 1 à 14 en tant qu'agents régulateurs de rhéologie et/ou en tant qu'agents renforçants et/ou flexibilisants ou en tant qu'agents de réticulation multifonctionnels.

**28.** Composition de revêtement réticulable selon les revendications 26 ou 27 **caractérisée en ce qu'**elle est réticulable par rayonnement en présence de photoamorceur radicalaire et/ou cationique ou par amorceur radicalaire thermique et/ou par condensation.

**29.** Composition selon l'une des revendications 26 à 28 **caractérisée en ce que** des microparticules différentes portent des fonctions f1 et/ou f2 et/ou f3 et/ou f4 distinctes mais réactives entre elles et formant un système réactif unique ou prédominant dans la composition.

**30.** Utilisation des compositions telles que définies à l'une des revendications 26 à 29 ou des microparticules telles que définies à l'une des revendications 1 à 14 ou telles qu'obtenues à partir du procédé tel que défini à l'une des revendications 15 à 25, dans des applications de vernis de protection, de peintures, d'adhésifs, d'encres, de composites, de poudres de moulage ou de revêtement ou de produits de moulage.

## Patentansprüche

1. Vernetzte Mikroteilchen mit einer Größe zwischen 10 und 300 nm, die durch Dispersionspolymerisation einer Zusammensetzung aus ethylenisch ungesättigten polymerisierbaren Verbindungen in nichtwäßrigem Medium, bei dem es sich um ein Nichtlösungsmittel für das gebildete Polymer handelt, erhältlich sind, **dadurch gekennzeichnet, daß** die Zusammensetzung aus den ethylenisch ungesättigten Verbindungen

   - mindestens ein Monomer A mit einer einzigen radikalisch polymerisierbaren ethylenischen Ungesättigtheit, das die in dem nichtwäßrigen Medium gebildeten Mikroteilchen während und nach der Polymerisation selbststabilisierend macht, und zwar ohne Zugabe von Polymer mit Stabilisierungsmittelfunktion vor, während oder nach der Polymerisation, und durch die folgende allgemeine Formel (I) definiert ist:

     $$CH_2{=}CR_1\text{-}X\text{-}(R_2\text{-}Y)_k\text{-}R \qquad (I)$$

     mit $R_1$ = H, $CH_3$,
     X = Ester -(C=O)O-, Amid -(C=O)N($R_3$)-,
     Y = Ester -O(O=C)-, Amid -($R_3$)N(C=O)-, Urethan -O(O=C)NH-,
     $R_2$ = $C_2$-$C_6$-Alkylenrest, der durch funktionelle Gruppen wie OH substituiert sein kann,
     $R_3$ = $C_1$-$C_6$-Alkyl, H,
     k = 0 oder 1,
     R = linearer oder verweigter $C_8$-$C_{22}$-Alkyl- oder Alkenylrest oder gegebenenfalls am aromatischen Ring substituierter $C_8$-$C_{22}$-Aralkylrest oder gegebenenfalls substituierter alicyclischer, mono- oder polycyclischer $C_6$-$C_{22}$-Rest, der eine unter Carbonsäure, Carbonsäureanhydrid, Hydroxy, Epoxy, Isocyanat und Silan ausgewählte reaktive Funktion f2 enthalten kann,
   - mindestens eine Verbindung B mit mindestens zwei radikalisch polymerisierbaren ethylenischen Ungesättigtheiten, die unter ethylenisch multifunktionellen Monomeren und/oder Oligomeren mit einer Funktionalität an radikalisch polymerisierbaren Ungesättigtheiten von mindestens 2 ausgewählt ist, wobei die Monomere unter Ethylenglykoldi(meth)acrylat, Propylenglykoldi(meth)acrylat, Butylenglykol-di(meth)acrylat, Methyl-2-propandioldi(meth)-acrylat, Neopentylglykoldi(meth)acrylat, Hexan-dioldi(meth)acrylat, Zinkdi(meth)acrylat und/oder Calciumdi(meth)acrylat oder gegebenenfalls substituierten Divinylbenzolen, Glycerintri(meth)acrylat, Trimethylolpropantri(meth)-acrylat und/oder alkoxylierten Derivaten, Pentaerythrittri(meth)acrylat oder -tetra-(meth) acrylat und Dipentaerythritpenta(meth)-acrylat und -hexa(meth)acrylat ausgewählt sind und die Oligomere unter (Meth)acrylsäureestern von Polyololigomeren, ungesättigten Polyestern oder (meth)acrylierten Acryloligomeren mit einer Funktionalität von 2 bis 50 und einem Mn von weniger als 2500 ausgewählt sind,

   und gegebenenfalls

   - mindestens eine Verbindung C mit einer einzigen radikalisch polymerisierbaren ethylenischen Ungesättigtheit, die von A verschieden ist,

   und/oder

   - mindestens eine von A, B und C verschiedene Verbindung D mit mindestens einer radikalisch polymerisierbaren ethylenischen Ungesättigtheit und einer zweiten reaktiven Funktion f1, bei der es sich nicht um eine ethylenische Ungesättigtheit handelt,

   enthält.

2. Mikroteilchen nach Anspruch 1, **dadurch gekennzeichnet, daß** die Zusammensetzung aus den ethylenisch ungesättigten Verbindungen

   - 5-99 Mol-% Monomer(e) A,
   - 0,02-30 Mol-% Verbindung(en) B

   und gegebenenfalls

- 0-80 Mol-% Verbindung(en) C und
- 0-80 Mol-% Verbindung(en) D

enthält, wobei die Molprozentanteile von A und B und gegebenenfalls C und/oder D innerhalb der oben angegebenen Grenzen so gewählt sind, daß ihre Summe 100%, bezogen auf die Zusammensetzung aus allen vorhandenen polymerisierbaren Verbindungen, beträgt.

**3.** Mikroteilchen nach Anspruch 1 oder 2, **dadurch gekennzeichnet, daß** das Monomer A unter Isobornyl(meth) acrylat, Norbornyl(meth)acrylat, Lauryl(meth)acrylat, Octadecyl(meth)acrylat, Docosanyl(meth)acrylat, Dicyclopentadienyl(meth)-acrylat, Cyclohexyl(meth)acrylat und 2-Ethylhexyl-(meth)acrylat oder Cardura-E10-(meth) acrylat oder Tridecyl(meth)acrylat oder Isodecyl(meth)acrylat ausgewählt ist.

**4.** Mikroteilchen nach einem der Ansprüche 1 bis 3, **dadurch gekennzeichnet, daß** es sich bei den Verbindungen B, C und D um Monomere und/oder Oligomere handelt und das Gewichtsverhältnis zwischen der Summe der polymerisierbaren Verbindungen und dem nichtwäßrigen Lösungsmittel zwischen 10/90 und 50/50 und vorzugsweise zwischen 15/85 und 30/70 liegt.

**5.** Mikroteilchen nach einem der Ansprüche 1 bis 4, **dadurch gekennzeichnet, daß** die Verbindung C unter (Meth) acrylmonomeren, vinylaromatischen Monomeren und Vinylestern und (meth)acrylierten Oligomeren mit einem Mn von weniger als 2500 ausgewählt ist.

**6.** Mikroteilchen nach Anspruch 5, **dadurch gekennzeichnet, daß** die (Meth)acrylmonomere unter Methyl(meth) acrylat, Ethyl(meth)acrylat, Propyl-(meth)acrylat, Butyl(meth)acrylat und tert.-Butyl-(meth)acrylat ausgewählt sind, die vinylaromatischen Monomere unter Styrol und Vinyltoluol ausgewählt sind und die (meth)acrylierten Oligomere unter (Meth)acrylaten von monofunktionellen Alkohololigomeren mit einem Mn von weniger als 1500 ausgewählt sind.

**7.** Mikroteilchen nach einem der Ansprüche 1 bis 6, **dadurch gekennzeichnet, daß** sie durch mindestens eine Verbindung D beigebrachte reaktive Funktionen f1 und/oder durch zumindest teilweise chemische Modifizierung der reaktiven Funktionen f1 nach dem Polymerisationsschritt eingeführte reaktive Funktionen f3 tragen.

**8.** Mikroteilchen nach einem der Ansprüche 1 bis 7, **dadurch gekennzeichnet, daß** die durch mindestens eine Verbindung D beigebrachten reaktiven Funktionen f1 unter Carbonsäure und/oder Carbonsäureanhydrid, Hydroxy, Epoxy, Isocyanat, Silan oder Amin oder Oxazolin so ausgewählt sind, daß sie während der Polymerisation nicht miteinander reagieren können.

**9.** Mikroteilchen nach Anspruch 8, **dadurch gekennzeichnet, daß** sie nach chemischer Modifizierung nach dem Polymerisationsschritt durch zumindest teilweise Modifizierung der Funktionen f1 zumindest teilweise Funktionen f3 tragen, die unter Acrylatfunktionen, Methacrylatfunktionen, Vinylfunktionen, Esterfunktionen oder Amidfunktionen mit einer ungesättigten $C_{12}$-$C_{22}$-Fettkette, Maleaten und/oder Maleinimiden, von Allylalkoholen abgeleiteten Estern oder cycloaliphatischen Ungesättigtheiten auf Basis von Dicyclopentadien oder einem Tetrahydrophthalsäurering oder Carbonsäuresalzen ausgewählt sind.

**10.** Mikroteilchen nach einem der Ansprüche 1 bis 9, **dadurch gekennzeichnet, daß** sie an der Oberfläche reaktive Funktionen f2 gemäß Anspruch 1 und/oder durch geeignete chemische Modifizierung der Funktionen f2 nach der Polymerisation erhaltene Funktionen f4 enthalten.

**11.** Mikroteilchen nach Anspruch 10, **dadurch gekennzeichnet, daß** es sich bei den Funktionen f4 um Acrylatfunktionen, Methacrylatfunktionen, Esterfunktionen oder Amidfunktionen mit einer ungesättigten $C_{12}$-$C_{22}$-Fettkette, Maleate und/oder Maleinimide, von Allylalkoholen abgeleitete Ester oder cycloaliphatische Ungesättigtheiten auf Basis von Dicyclopentadien oder einem Tetrahydrophthalsäurering oder Carbonsäuresalze handelt.

**12.** Mikroteilchen nach einem der Ansprüche 1 bis 11, **dadurch gekennzeichnet, daß** das (Meth)acrylsäureester-Oligomer von Polyololigomeren der Verbindung B auf Polyethern mit unter Oxyethylen und/oder Oxypropylen und/oder Oxytetramethylen ausgewählten Ethereinheiten oder auf gesättigten Polyestern oder auf Polyurethanen basiert.

**13.** Mikroteilchen nach einem der Ansprüche 1 bis 12, **dadurch gekennzeichnet, daß** die Polymerisation in mehreren

aufeinanderfolgenden Schritten mit für jeden Schritt gleichen oder verschiedenen Zusammensetzungen aus polymerisierbaren Verbindungen durchgeführt wird.

**14.** Mikroteilchen nach einem der Ansprüche 1 bis 13, **dadurch gekennzeichnet, daß** die Zusammensetzung aus den ethylenisch ungesättigten Verbindungen gemäß Anspruch 1

- 0-30 Mol-% Octadecyl(meth)acrylat und/oder 5-80 Mol-% Isobornyl(meth)acrylat als Monomer(e) A,
- 0,02-30 Mol-% Hexandioldi(meth)acrylat als Verbindung B,
- 0-50 Mol-% Styrol und/oder Methyl(meth)acrylat und/oder Butyl(meth)acrylat oder tert.-Butyl(meth)acrylat als Verbidnung C und
- 0-50 Mol-% Glycidyl(meth)acrylat als Verbindung D

enthält, wobei die Molprozentanteile von A, B, C und D so gewählt sind, daß ihre Summe 100%, bezogen auf die Zusammensetzung aus allen vorhandenen polymerisierbaren Verbindungen, beträgt, und die reaktiven Glycidylfunktionen durch Reaktion mit einer ethylenisch ungesättigten Säure oder einem ethylenisch ungesättigten Anhydrid zumindest teilweise modifiziert sein können.

**15.** Verfahren zur Herstellung von vernetzten Mikroteilchen gemäß einem der Ansprüche 1 bis 14 mit einem Schritt der Dispersionspolymerisation einer Zusammensetzung aus ethylenisch ungesättigten polymerisierbaren Verbindungen in nichtwäßrigem Medium, bei dem es sich um ein Nichtlösungsmittel für das gebildete Polymer handelt, **dadurch gekennzeichnet, daß** man den Polymerisationsschritt mit einer Zusammensetzung, die

- mindestens ein Monomer A mit einer einzigen radikalisch polymerisierbaren ethylenischen Ungesättigtheit, das die in dem nichtwäßrigen Medium gebildeten Mikroteilchen während und nach der Polymerisation selbststabilisierend macht, und zwar ohne Zugabe von Polymer mit Stabilisierungsmittelfunktion vor, während oder nach der Polymerisation, vorzugsweise auf die äußere Schicht und besonders bevorzugt auf die Oberfläche der so erhaltenen Mikroteilchen aufgepfropft ist und durch die folgende allgemeine Formel (I) definiert ist:

$$CH_2=CR_1\text{-}X\text{-}(R_2\text{-}Y)_k\text{-}R \qquad (I)$$

mit $R_1$ = H, $CH_3$,
X = Ester -(C=O)O-, Amid -(C=O)N($R_3$)-,
Y = Ester -O(O=C)-, Amid -($R_3$)N(C=O)-, Urethan -O(O=C)NH-,
$R_2$ = $C_2$-$C_6$-Alkylenrest, der durch funktionelle
Gruppen wie OH substituiert sein kann,
$R_3$ = $C_1$-$C_6$-Alkyl, H,
k = 0 oder 1,
R = linearer oder verweigter $C_8$-$C_{22}$-Alkyl- oder Alkenylrest oder gegebenenfalls am aromatischen Ring substituierter $C_8$-$C_{22}$-Aralkylrest oder gegebenenfalls substituierter alicyclischer, mono- oder polycyclischer $C_6$-$C_{22}$-Rest, der eine unter Carbonsäure, Carbonsäureanhydrid, Hydroxy, Epoxy, Isocyanat und Silan ausgewählte reaktive Funktion f2 enthalten kann,
- mindestens eine Verbindung B mit mindestens zwei polymerisierbaren ethylenischen Ungesättigtheiten, die unter ethylenisch multifunktionellen Monomeren und/oder Oligomeren mit einer Funktionalität von mindestens 2 ausgewählt ist, wobei die Monomere unter Ethylenglykoldi(meth)acrylat, Propylenglykoldi(meth)acrylat, Butylenglykoldi(meth)acrylat, Methyl-2-propandioldi(meth)-acrylat, Neopentylglykoldi(meth)acrylat, Hexandioldi(meth)acrylat, Zinkdi(meth)acrylat und/oder Calciumdi(meth)acrylat oder gegebenenfalls substituierten Divinylbenzolen, Glycerintri(meth)acrylat, Trimethylolpropantri(meth)-acrylat und/oder alkoxylierten Derivaten, Pentaerythrittri(meth)acrylat oder -tetra-(meth)acrylat und Dipentaerythritpenta(meth)-acrylat und -hexa(meth)acrylat ausgewählt sind und die Oligomere unter (Meth)acrylsäureestern von Polyololigomeren, ungesättigten Polyestern oder (meth)acrylierten Acryloligomeren mit einer Funktionalität von 2 bis 50 und einem Mn von weniger als 2500 ausgewählt sind,

und gegebenenfalls je nachdem

- mindestens eine Verbindung C mit einer einzigen polymerisierbaren ethylenischen Ungesättigtheit, die von A verschieden ist,

und/oder

- mindestens eine von A, B und C verschiedene Verbindung D mit mindestens einer polymerisierbaren ethylenischen Ungesättigtheit und einer zweiten reaktiven Funktion f1, bei der es sich nicht um eine ethylenische Ungesättigtheit handelt,

enthält, durchführt.

**16.** Verfahren nach Anspruch 15, **dadurch gekennzeichnet, daß** man das Monomer A unter Isobornyl(meth)acrylat, Norbornyl(meth)acrylat, Lauryl(meth)acrylat, Octadecyl(meth)acrylat, Docosanyl(meth)acrylat, Dicyclopentadienyl(meth)-acrylat, Cyclohexyl(meth)acrylat oder 2-Ethylhexyl(meth)acrylat oder Cardura-E10-(meth)acrylat, Tridecyl(meth)acrylat oder Isodecyl(meth)acrylat auswählt.

**17.** Verfahren nach Anspruch 15 oder 16, **dadurch gekennzeichnet, daß** es sich bei den Verbindungen B, C und D um Monomere und/oder Oligomere gemäß einem der Ansprüche 1, 4, 5 und 7 handelt und das Gewichtsverhältnis zwischen der Summe der polymerisierbaren Verbindungen A, B, C und D und dem nichtwäßrigen Lösungsmittel zwischen 10/90 und 50/50 und vorzugsweise zwischen 15/85 und 30/70 liegt.

**18.** Verfahren nach einem der Ansprüche 15 bis 17, **dadurch gekennzeichnet, daß** das nichtwäßrige Medium mindestens ein unter $C_6$-$C_{10}$-Alkanen und/oder $C_3$-$C_5$-Alkanolen und vorzugsweise unter Hexanen, Heptanen, Cyclohexanen, Octanen, Nonanen, Isopropanol, Butanol und Pentanol ausgewähltes Lösungsmittel enthält.

**19.** Verfahren nach einem der Ansprüche 15 bis 18, **dadurch gekennzeichnet, daß** das nichtwäßrige Medium aus einer Mischung aus n-Heptan und Isopropanol in einem Gewichtsverhältnis von 0/100 bis 75/25 und vorzugsweise von 25/75 bis 50/50 besteht.

**20.** Verfahren nach einem der Ansprüche 15 bis 19, **dadurch gekennzeichnet, daß** man den Polymerisationsschritt durchführt, nachdem man in einem vorhergehenden Schritt in dem Medium organische oder anorganische Mikroteilchen, die in dem Medium unlöslich sind und unter organischen und anorganischen Pigmenten, organischen oder anorganischen Füllstoffen oder Additiven und/oder Mikroteilchen nach den Ansprüchen 1 bis 14, die in dem Medium unlöslich sind, ausgewählt sind, dispergiert hat.

**21.** Verfahren nach einem der Ansprüche 15 bis 20, **dadurch gekennzeichnet, daß** man in einem zusätzlichen Schritt die gebildeten Mikroteilchen durch Abdampfen der Lösungsmittel gewinnt.

**22.** Verfahren nach einem der Ansprüche 15 bis 21, **dadurch gekennzeichnet, daß** man den Polymerisationsschritt durchführt, indem man die Zusammensetzung aus den polymerisierbaren Verbindungen in einem oder mehreren aufeinanderfolgenden Schritten kontinuierlich und/oder diskontinuierlich zugibt, wobei man in jedem Schritt gleiche oder von einem Schritt zu einem anderen verschiedenen Zusammensetzungen verwendet.

**23.** Verfahren nach einem der Ansprüche 15 bis 22, **dadurch gekennzeichnet, daß** man den Polymerisationsschritt durchführt, indem man die polymerisierbaren Verbindungen und vorzugsweise zumindest das Monomer A, wenn sich die Reaktivität des Monomers A von der Reaktivität der anderen polymerisierbaren Verbindungen wesentlich unterscheidet, kontinuierlich zugibt.

**24.** Verfahren nach einem der Ansprüche 15 bis 22, **dadurch gekennzeichnet, daß** man dann, wenn sich die Reaktivität des Monomers A von der Reaktivität der anderen polymerisierbaren Verbindungen wesentlich unterscheidet, den betreffenden Polymerisationsschritt diskontinuierlich durchführt mit der Maßgabe, daß mindestens ein zweites Monomer A zugegen ist, das eine solche Reaktivität aufweist, daß die durchschnittliche Reaktivität der Monomere A in der Nähe der durchschnittlichen Reaktivität der anderen polymerisierbaren Verbindungen liegt.

**25.** Verfahren nach einem der Ansprüche 15 bis 24, **dadurch gekennzeichnet, daß** man in dem Fall, daß die Zusammensetzung aus den polymerisierbaren Verbindungen eine Verbindung D gemäß Anspruch 1 oder 7 oder ein Monomer A gemäß Anspruch 1 mit einer Funktion f2 am Rest R enthält, außerdem nach dem Polymerisationsschritt in einem zusätzlichen Schritt die reaktiven Funktionen f1 durch zumindest teilweise chemische Modifizierung in Funktionen f3 und/oder gegebenenfalls reaktive Funktionen f2 in Funktionen f4 umwandelt.

**26.** Beschichtungs- oder Formmasse, **dadurch gekennzeichnet, daß** sie Mikroteilchen gemäß einem der Ansprüche

1 bis 14 als reaktive oder nichtreaktive Komponenten enthält oder daraus besteht.

**27.** Vernetzbare Beschichtungs-, Form- oder Verbundmassen, **dadurch gekennzeichnet, daß** sie Mikroteilchen gemäß einem der Ansprüche 1 bis 14 als Rheologieregler und/oder Verstärkungsmittel und/oder Elastifizierungsmittel oder als multifunktionelle Vernetzungsmittel enthalten.

**28.** Vernetzbare Beschichtungsmasse nach Anspruch 26 oder 27, **dadurch gekennzeichnet, daß** sie durch Strahlung in Gegenwart eines radikalischen und/oder kationischen Photoinitiators oder durch einen thermischen radikalischen Initiator und/oder durch Kondensation vernetzbar ist.

**29.** Masse nach einem der Ansprüche 26 bis 28, **dadurch gekennzeichnet, daß** die verschiedenen Mikroteilchen Funktionen f1 und/oder f2 und/oder f3 und/oder f4 tragen, die voneinander verschieden, aber gegenüber einander reaktiv sind und in der Masse ein einziges oder dominierendes reaktives System bilden.

**30.** Verwendung von Massen gemäß einem der Ansprüche 26 bis 29 oder von Mikroteilchen gemäß einem der Ansprüche 1 bis 14 oder von nach einem Verfahren gemäß einem der Ansprüche 15 bis 25 erhältlichen Mikroteilchen bei Schutzlack-, Anstrichmittel-, Klebstoff-, Tinten-, Verbund-, Form- oder Beschichtungspulver- oder Formteil-Anwendungen.

## Claims

**1.** Crosslinked microparticles between 10 and 300 nm in size, obtained by dispersion polymerization, in non-aqueous medium which is non-solvent for the polymer formed, starting with a composition of ethylenically unsaturated polymerizable compounds, the said microparticles being **characterized in that** the said composition of the ethylenically unsaturated compounds comprises:

- at least one monomer A, comprising only one ethylenic unsaturation which can undergo radical-mediated polymerization, giving the microparticles formed in the said non-aqueous medium self-stabilization during and after polymerization, without any addition of polymer having the function of a stabilizing agent, either before, during or after polymerization, the monomer A being defined by the general formula (I) below:

$$CH_2=CR_1\text{-}X\text{-}(R_2\text{-}Y)_k\text{-}R \qquad (I)$$

  where $R_1$ = H or $CH_3$
  X = ester -(C=O)O-, amide -(C=O)N($R_3$)-
  Y = ester -O(O=C)-, amide -($R_3$)N(C=O)- or urethane -O(O=C)NH-,
  $R_2$ = $C_2$-$C_6$ alkylene radical which can be substituted by functional groups such as OH,
  $R_3$ = $C_1$ to $C_6$ alkyl or H
  k = 0 or 1, and
  R = $C_8$-$C_{22}$ linear or branched alkyl or alkenyl radical, or $C_8$-$C_{22}$ aralkyl radical unsubstituted or substituted on the aromatic ring, or $C_6$-$C_{22}$ mono- or polycyclic alicyclic radical, unsubstituted or substituted, which may contain a reactive function f2 selected from: carboxylic acid or anhydride, hydroxyl, epoxy, isocyanate and silane.
- at least one compound B comprising at least two ethylenic unsaturations which can undergo radical-mediated polymerization, the compound B being selected from ethylenically polyfunctional monomers and/or oligomers with a functionality, in terms of unsaturations which can undergo radical-mediated polymerization, of at least 2, with the said monomers being selected from: the di(meth)acrylates of ethylene glycol, of propylene glycol, of butanediol, of 2-methylpropanediol, of neopentyl glycol, of hexanediol, of zinc and/or of calcium, or substituted or unsubstituted divinylbenzenes, the tri(meth)acrylates of glycerol, of trimethylolpropane and/or alkoxylated derivatives, the tri- or tetra(meth)acrylates of pentaerythritol and the penta- or hexa(meth)acrylates of dipentaerythritol, and the said oligomers being selected from: (meth)acrylic esters of polyol oligomers, unsaturated polyesters or (meth)acrylated acrylic oligomers, with a functionality ranging from 2 to 50 and with an Mn of less than 2500

and, optionally:

- at least one compound C comprising only one ethylenic unsaturation which can undergo radical-mediated polymerization, which is different from A

and/or

- at least one compound D which is different from A, B and C and comprising at least one ethylenic unsaturation which can undergo radical-mediated polymerization and at least one second reactive function f1 which is other than an ethylenic unsaturation.

2. Microparticles according to Claim 1, **characterized in that** the composition of the ethylenically unsaturated polymerizable compounds comprises:

- 5-99 mol% of the monomer(s) A
- 0.02-30 mol% of the compound(s) B

and, optionally:

- 0-80 mol% of the compound(s) C
- 0-80 mol% of the compound(s) D

with the molar percentages of A and B and optionally of C and/or D chosen within the limits defined above, such that their sum is equal to 100% relative to the composition of all of the polymerizable compounds present.

3. Microparticles according to either of Claims 1 and 2, **characterized in that** the monomer A is selected from: isobornyl (meth)acrylate, norbornyl (meth)acrylate, lauryl (meth)acrylate, octadecyl (meth)acrylate, docosanyl (meth)acrylate, dicyclopentadienyl (meth)acrylate, cyclohexyl (meth)acrylate and 2-ethylhexyl (meth)acrylate or Cardura E10 (meth)acrylate or tridecyl (meth)acrylate or isodecyl (meth)acrylate.

4. Microparticles according to one of Claims 1 to 3, **characterized in that** the compounds B, C and D are monomers and/or oligomers and that the weight ratio between the sum of the polymerizable compounds and the non-aqueous solvent is between 10/90 and 50/50 and more preferably between 15/85 and 30/70.

5. Microparticles according to one of Claims 1 to 4, **characterized in that** compound C is selected from (meth)acrylic, vinylaromatic and vinyl ester monomers and (meth)acrylated oligomers with an $\overline{Mn}$ of less than 2500.

6. Microparticles according to Claim 5, **characterized in that** the (meth)acrylic monomers are selected from methyl, ethyl, propyl, butyl and tert-butyl (meth)acrylates, the vinylaromatic monomers are selected from styrene and vinyltoluene and the (meth)acrylated oligomers are selected from (meth)acrylates of monofunctional alcohol oligomers with an $\overline{Mn}$ of less than 1500.

7. Microparticles according to one of Claims 1 to 6, **characterized in that** they bear reactive functions f1 borne by at least one compound D and/or reactive functions f3 introduced by the at least partial chemical modification of the said reactive functions f1 after the polymerization step.

8. Microparticles according to one of Claims 1 to 7, **characterized in that** the reactive functions f1 borne by at least one compound D are selected from: carboxylic acid and/or anhydride, hydroxyl, epoxy, isocyanate, silane or amine or oxazoline such that they cannot react with each other during the polymerization.

9. Microparticles according to Claim 8, **characterized in that**, after chemical modification, following the polymerization step, these microparticles at least partially bear functions f3, by at least partial modification of the functions f1, selected from acrylate, methacrylate, vinyl, ester or amide functions containing a $C_{12}$-$C_{22}$ unsaturated fatty chain, maleate and/or maleimide functions, ester functions derived from allylic alcohols or cycloaliphatic unsaturations based on dicyclopentadiene or on a tetrahydrophthalic ring, or carboxylic acid salts.

10. Microparticles according to one of Claims 1 to 9, **characterized in that** they comprise at the surface reactive functions f2 as defined in Claim 1 and/or functions f4 obtained by suitable chemical modification of the functions f2, after polymerization.

**11.** Microparticles according to Claim 10, **characterized in that** the functions f4 are acrylate, methacrylate, ester or amide functions containing a $C_{12}$-$C_{22}$ unsaturated fatty chain, maleate and/or maleimide functions, ester functions derived from allylic alcohols or cycloaliphatic unsaturations based on dicyclopentadiene or on a tetrahydrophthalic ring system, or carboxylic acid salts.

**12.** Microparticles according to one of Claims 1 to 11, **characterized in that** the said (meth)acrylic ester oligomer of polyol oligomer of the said compound B is based on polyethers, comprising ether units selected from oxyethylene and/or oxypropylene and/or oxytetramethylene, or based on saturated polyesters or based on polyurethanes.

**13.** Microparticles according to one of Claims 1 to 12, **characterized in that** the polymerization is carried out in several successive steps, with compositions of polymerizable compounds that are identical or different for each step.

**14.** Microparticles according to one of Claims 1 to 13, **characterized in that** the composition of the ethylenically unsaturated compounds as defined in Claim 1 comprises:

- 0-30 mol% of octadecyl (meth)acrylate and/or 5-80 mol% of isobornyl (meth)acrylate as monomer(s) A
- 0.02-30 mol% of hexanediol di(meth)acrylate as compound B
- 0-50 mol% of styrene and/or of methyl and/or butyl or tert-butyl (meth)acrylate, as compound C
- 0-50 mol% of glycidyl (meth)acrylate as compound D,

with the molar percentages of A, B, C and D selected such that their sum is equal to 100% of the composition of the polymerizable compounds and with the glycidyl reactive functions possibly being at least partially modified by reaction with an ethylenically unsaturated acid or anhydride.

**15.** Process for preparing crosslinked microparticles as defined in one of Claims 1 to 14, comprising a step of dispersion polymerization, in non-aqueous medium which is non-solvent for the polymer formed, of a composition of ethylenically unsaturated polymerizable compounds, **characterized in that** the polymerization step is carried out on a composition comprising:

- at least one monomer A, comprising only one ethylenic unsaturation which can undergo radical-mediated polymerization and giving the microparticles formed in the said non-aqueous medium self-stabilization during and after the polymerization, without any addition of polymeric stabilizing agent, either before, during or after the dispersion polymerization, with the said monomer A preferably being grafted to the outer layer and more preferably to the surface of the microparticles thus obtained, the monomer A being defined by the general formula (I) below:

$$CH_2=CR_1\text{-}X\text{-}(R_2\text{-}Y)_k\text{-}R \qquad (I)$$

where $R_1$ = H or $CH_3$,
X = ester -(C=O)O- or amide -(C=O)N($R_3$)-,
Y = ester -O(O=C)-, amide -($R_3$)N(C=O)- or urethane -O(O=C)NH-,
$R_2$ = $C_2$-$C_6$ alkylene radical which may be substituted by functional groups such as OH,
$R_3$ = $C_1$ to $C_6$ alkyl or H,
k = 0 or 1, and
R = $C_8$-$C_{22}$ linear or branched alkyl or alkenyl radical, or $C_8$-$C_{22}$ aralkyl radical unsubstituted or substituted on the aromatic ring, or $C_6$-$C_{22}$ mono- or polycyclic alicyclic radical, unsubstituted or substituted, which may contain a reactive function f2 selected from: carboxylic acid or anhydride, hydroxyl, epoxy, isocyanate and silane;

- at least one compound B comprising at least two polymerizable ethylenic unsaturations, the compound B being selected from ethylenically polyfunctional monomers and/or oligomers with a functionality of at least 2, with the said monomers being selected from: the di(meth)acrylates of ethylene glycol, of propylene glycol, of butanediol, of 2-methylpropanediol, of neopentyl glycol, of hexanediol, of zinc and/or of calcium, or substituted or unsubstituted divinylbenzenes, the tri(meth)acrylates of glycerol, of trimethylolpropane and/or alkoxylated derivatives, the tri- or tetra(meth)acrylates of pentaerythritol and the penta- or hexa(meth)acrylates of dipentaerythritol, and the said oligomers being selected from: the (meth)acrylic esters of polyol oligomers, unsaturated polyesters, or (meth)acrylated acrylic oligomers, with a functionality ranging from 2 to 50 and with an

Mn of less than 2500 and optionally, depending on the case:

- at least one compound C, comprising only one polymerizable ethylenic unsaturation, which is different from A and/or
- at least one compound D which is different from A, B and C, comprising at least one polymerizable ethylenic unsaturation and at least one second reactive function f1 which is different from the ethylenic unsaturation.

**16.** Process according to Claim 15, **characterized in that** the monomer A is selected from: isobornyl (meth)acrylate, norbornyl (meth)acrylate, lauryl (meth)acrylate, octadecyl (meth)acrylate, docosanyl (meth)acrylate, dicyclopentadienyl (meth)acrylate, cyclohexyl (meth)acrylate and 2-ethylhexyl (meth)acrylate or Cardura E10 (meth)acrylate, tridecyl (meth)acrylate or isodecyl (meth)acrylate.

**17.** Process according to either of Claims 15 and 16, **characterized in that** the compounds B, C and D are monomers and/or oligomers as defined in one of Claims 1, 4, 5 and 7, and **in that** the weight ratio between the sum of the polymerizable compounds A, B, C and D and the non-aqueous solvent is from 10/90 to 50/50 and more preferably from 15/85 to 30/70.

**18.** Process according to one of Claims 15 to 17, **characterized in that** the non-aqueous medium comprises at least one solvent selected from $C_6$-$C_{10}$ alkanes and/or $C_3$-$C_5$ alkanols and preferably from hexanes, heptanes, cyclohexanes, octanes, nonanes, isopropanol, butanol and pentanol.

**19.** Process according to one of Claims 15 to 18, **characterized in that** the non-aqueous medium consists of a mixture of n-heptane/isopropanol in a weight ratio ranging from 0/100 to 75/25 and preferably from 25/75 to 50/50.

**20.** Process according to one of Claims 15 to 19, **characterized in that** the polymerization step is carried out after a prior step of dispersion, in the medium, of organic or inorganic microparticles which are insoluble in this medium, these microparticles being chosen from organic or inorganic pigments, organic or inorganic fillers or additives and/or microparticles according to Claims 1 to 14 which are insoluble in this medium.

**21.** Process according to one of Claims 15 to 20, **characterized in that** it comprises an additional step of recovery of the microparticles formed by evaporating the solvents.

**22.** Process according to one of Claims 15 to 21, **characterized in that** the polymerization step is carried out by continuous and/or batchwise addition of the composition of the polymerizable compounds in one or more successive steps, and with compositions introduced in each step, which may be identical or different from one step to another.

**23.** Process according to one of Claims 15 to 22, **characterized in that** the polymerization step is carried out by continuous addition of the polymerizable compounds and preferably of at least the monomer A when the monomer A has substantially different reactivity relative to that of the other polymerizable compounds.

**24.** Process according to one of Claims 15 to 22, **characterized in that**, when the monomer A has substantially different reactivity relative to that of the other polymerizable compounds, the polymerization step concerned is carried out in a batchwise manner under the condition that at least one second monomer A is present which has a reactivity such that the average reactivity of the monomers A is similar to the average reactivity of the other polymerizable compounds.

**25.** Process according to one of Claims 15 to 24, **characterized in that**, when the composition of the polymerizable compounds comprises a compound D as defined in Claim 1 or 7 or a monomer A as defined in Claim 1 comprising a function f2 on the radical R, the said process also comprises, after the polymerization step, an additional step of at least partial chemical modification of the reactive functions f1 into functions f3 and/or optionally of the reactive functions f2 into functions f4.

**26.** Coating or moulding composition, **characterized in that** it contains or consists of microparticles as defined in one of Claims 1 to 14, as reactive or unreactive components.

**27.** Crosslinkable coating or moulding or composite compositions, **characterized in that** they contain microparticles as defined in one of Claims 1 to 14, as rheology regulators and/or as reinforcing agents and/or flexibilizing agents

or as multifunctional crosslinking agents.

**28.** Crosslinkable coating composition according to Claim 26 or 27, **characterized in that** it can be crosslinked by radiation in the presence of a radical-mediated and/or cationic photoinitiator or by a radical-mediated thermal initiator and/or by condensation.

**29.** Composition according to one of Claims 26 to 28, **characterized in that** different microparticles bear functions f1 and/or f2 and/or f3 and/or f4 which are different from each other but mutually reactive and which form a sole or predominant reactive system in the composition.

**30.** Use of the compositions as defined in one of Claims 26 to 29 or of the microparticles as defined in one of Claims 1 to 14 or as obtained from the process as defined in one of Claims 15 to 25, in applications as protective varnishes, paints, adhesives, inks, composites, moulding or coating powders or moulding products.

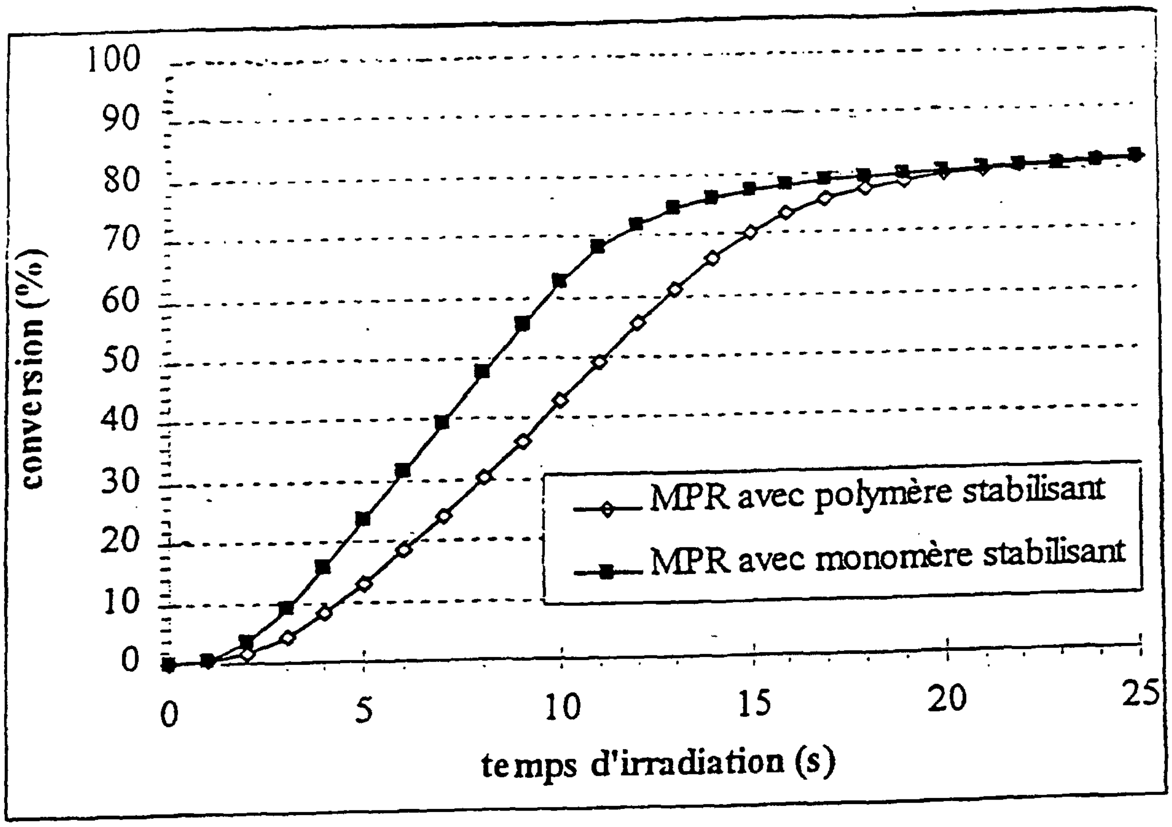
100
90
80
70
60
50
40
30
20
10
0
conversion (%)
0
5
10
15
20
25
temps d'irradiation (s)
MPR avec polymère stabilisant
MPR avec monomère stabilisant

FIG. 1